# EUROPEAN PATENT APPLICATION

(11) **EP 4 756 850 A1**
(43) Date of publication of application: **10.06.2026**
(21) Application number: 25220831.9
(22) Date of filing: 04.12.2025
(51) Int. Cl.: H01F 27/24, H01F 27/30, H01F 27/38, H01F 30/12, H02M 3/28

(54) **MULTI-MODULE DC-DC CONVERTER, INTEGRATED MAGNETIC COMPONENT, AND MANUFACTURING METHOD OF INTEGRATED MAGNETIC COMPONENT**

(30) Priority: 05.12.2024 US 202463728327 P
(71) Applicant: Delta Electronics, Inc., Neihu, Taipei 11491 (TW)
(72) Inventor: Jin, Feng, Morrisville,, NC 27560 (US); Wang, Dakai, Morrisville,, NC 27560 (US); Kumar, Misha, Morrisville,, NC 27560 (US); Barbosa, Peter Mantovanelli, 320023 Taoyuan City, (TW)
(74) Representative: Uexküll & Stolberg

(57) **Abstract**

An integrated magnetic component and a manufacturing method thereof for a multi-module DC-DC converter (1) are provided. The integrated magnetic component includes N primary windings (Wp1, Wp2), N secondary windings (Wsl, Ws2) and N magnetic cores (21, 22), and N is an integer greater than one. The N magnetic cores (21, 22) are arranged sequentially, and each magnetic core includes a plate (20), first and second common core legs (CCL), an inductor core leg (PICL, SICL) and a transformer core leg (TCL). The first common core leg and the second common core leg are disposed at a first side (201) and a second side (202) of the plate (20) respectively. The inductor core leg (PICL, SICL) is configured to be wound with a corresponding primary or secondary winding, and the transformer core leg (TCL) is configured to be wound with the corresponding primary and secondary windings interleaved with each other.

## Description

### FIELD OF THE DISCLOSURE

The present disclosure relates to a DC-DC converter, a magnetic component, and a manufacturing method of the magnetic component, and more particularly to a multi-module DC-DC converter, an integrated magnetic component, and a manufacturing method of the integrated magnetic component.

### BACKGROUND OF THE DISCLOSURE

In multi-module converters, when multiple modules are connected in parallel, effective current-sharing methods, such as maximum current sharing or droop control, are critical to ensure balanced operation. For example, in resonant converters, frequency modulation is typically employed for regulation, which can complicate the control strategy. Conversely, in PWM converters, voltage gain is adjusted through duty cycle control or phase shift control, which directly influences the current-sharing conditions among parallel modules. Similarly, when multiple modules are connected in series, effective voltage-sharing methods would be required.

The need for more complex control strategies, such as frequency modulation and phase shift control, results in the increased use of higher-cost MCUs (microcontroller units) or DSPs (digital signal processors) and greater consumption of control resources.

### SUMMARY OF THE DISCLOSURE

The present disclosure provides a multi-module DC-DC converter, an integrated magnetic component, and a manufacturing method of the integrated magnetic component to overcome the drawbacks of the conventional technologies.

In accordance with an aspect of the present disclosure, an integrated magnetic component for a multi-module DC-DC converter is provided. The integrated magnetic component includes N primary windings, N secondary windings and N magnetic cores, and N is an integer greater than one. The N magnetic cores are arranged sequentially. Each magnetic core includes a plate, a first common core leg, a second common core leg, an inductor core leg and a transformer core leg. The first common core leg and the second common core leg are disposed at a first side and a second side of the plate respectively. The inductor core leg and the transformer core leg are disposed on the plate. The inductor core leg is configured to be wound with a corresponding primary winding of the N primary windings or a corresponding secondary winding of the N secondary windings, and the transformer core leg is configured to be wound with the corresponding primary winding and the corresponding secondary winding interleaved with each other.

In accordance with another aspect of the present disclosure, a manufacturing method of an integrated magnetic component for a multi-module DC-DC converter is provided. The manufacturing method comprises providing N primary windings and N secondary windings, wherein N is an integer greater than one; providing N magnetic cores arranged sequentially, wherein each of the N magnetic cores includes a plate, a first common core leg, a second common core leg, an inductor core leg and a transformer core leg, wherein in each of the N magnetic cores, the first common core leg and the second common core leg are disposed at a first side and a second side of the plate respectively, the inductor core leg and the transformer core leg are disposed on the plate; and in each of the N magnetic cores, configuring the inductor core leg to be wound with a corresponding primary winding of the N primary windings or a corresponding secondary winding of the N secondary windings, and configuring the transformer core leg to be wound with the corresponding primary winding and the corresponding secondary winding interleaved with each other.

In accordance with further another aspect of the present disclosure, multi-module DC-DC converter is provided. The multi-module DC-DC converter includes N conversion modules configured to be connected between a power source and a load, wherein N is an integer greater than one. Each conversion module includes a DC/AC cell, a transformer and inductor cell and an AC/DC cell. N transformer and inductor cells of the N conversion modules are formed by an integrated magnetic component. The integrated magnetic component includes N primary windings, N secondary windings and N magnetic cores, and the N magnetic cores are arranged sequentially. Each magnetic core includes a plate, a first common core leg, a second common core leg, an inductor core leg and a transformer core leg. The first common core leg and the second common core leg are disposed at a first side and a second side of the plate respectively. The inductor core leg and the transformer core leg are disposed on the plate. The inductor core leg is configured to be wound with a corresponding primary winding of the N primary windings or a corresponding secondary winding of the N secondary windings, and the transformer core leg is configured to be wound with the corresponding primary winding and the corresponding secondary winding interleaved with each other.

### BRIEF DESCRIPTION OF THE DRAWINGS

FIG. 1 is a schematic circuit diagram illustrating a multi-module DC-DC converter according to an embodiment of the present disclosure;
FIG. 2 schematically shows a circuit topology of the conversion module in FIG. 1;
FIG. 3A exemplifies various possible implementations of the DC/AC cell of the conversion module in FIG. 2;
FIG. 3B exemplifies various possible implementations of the transformer and inductor cell of the conversion module in FIG. 2;
FIG. 3C exemplifies various possible implementations of the AC/DC cell of the conversion module in FIG. 2;
FIG. 4 schematically shows a first implementation of the multi-module DC-DC converter of FIG. 1;
FIG. 5A is a schematic view illustrating a magnetic core of an integrated magnetic component according to a first embodiment of the present disclosure;
FIGS. 5B, 5C and 5D schematically show various integrated magnetic components forming the transformer and inductor cells of the conversion modules of FIG. 4 based on the magnetic core shown in FIG. 5A;
FIGS. 6A and 6B schematically show a variant of the integrated magnetic component of FIG. 5B and the corresponding winding arrangement;
FIGS. 6C and 6D schematically show a variant of the integrated magnetic component of FIG. 5C and the corresponding winding arrangement;
FIGS. 6E and 6F schematically show a variant of the integrated magnetic component of FIG. 5D and the corresponding winding arrangement;
FIG. 7A is a schematic view illustrating a magnetic core of an integrated magnetic component according to a second embodiment of the present disclosure;
FIGS. 7B, 7C and 7D schematically shows various integrated magnetic components forming the transformer and inductor cells of the conversion modules of FIG. 4 based on the magnetic core shown in FIG. 7A;
FIG. 8 schematically shows a second implementation of the multi-module DC-DC converter of FIG. 1;
FIG. 9A is a schematic view illustrating a magnetic core of an integrated magnetic component according to a third embodiment of the present disclosure;
FIG. 9B schematically shows the integrated magnetic component forming the transformer and inductor cells of the conversion modules of FIG. 8 based on the magnetic core shown in FIG. 9A;
FIGS. 10A and 10B schematically show a variant of the integrated magnetic component of FIG. 9B and the corresponding winding arrangement;
FIG. 11A is a schematic view illustrating a magnetic core of an integrated magnetic component according to a fourth embodiment of the present disclosure;
FIG. 11B schematically shows the integrated magnetic component forming the transformer and inductor cells of the conversion modules of FIG. 8 based on the magnetic core shown in FIG. 11A;
FIGS. 12A and 12B schematically show a variant of the integrated magnetic component of FIG. 11B and the corresponding winding arrangement;
FIG. 13A schematically shows the integrated magnetic component forming the transformer and inductor cells of four conversion modules based on the magnetic core shown in FIG. 5A;
FIG. 13B schematically shows a variant of the integrated magnetic component of FIG. 13A;
FIG. 14 schematically shows a variant of the integrated magnetic component of FIG. 5B;
FIG. 15A schematically shows a three-phase conversion module;
FIG. 15B schematically shows three magnetic cores corresponding to the three phases in FIG. 15A based on the structure of magnetic core shown in FIG. 5A;
FIG. 15C schematically shows an integration of the three magnetic cores shown in FIG. 15B; and
FIG. 16 schematically shows an integrated magnetic component forming the transformer and inductor cells of two three-phase conversion modules based on the magnetic core shown in FIG. 15C.

### DETAILED DESCRIPTION OF THE PREFERRED EMBODIMENT

The present disclosure will now be described more specifically with reference to the following embodiments. It is to be noted that the following descriptions of preferred embodiments of this disclosure are presented herein for purpose of illustration and description only. It is not intended to be exhaustive or to be limited to the precise form disclosed.

The present disclosure proposes a general scheme to simplify the magnetic components used in parallel-connected or series-connected modules of the multi-module converter by integrating inductors, main transformers, and balancing circuits from multiple modules into a single integrated magnetic component. The integrated design reduces magnetic complexity, minimizes losses, and enhances overall performance. Additionally, the proposed integrated magnetic component can be extended to three-phase converters, ensuring effective current sharing among parallel modules and phase balancing within each module.

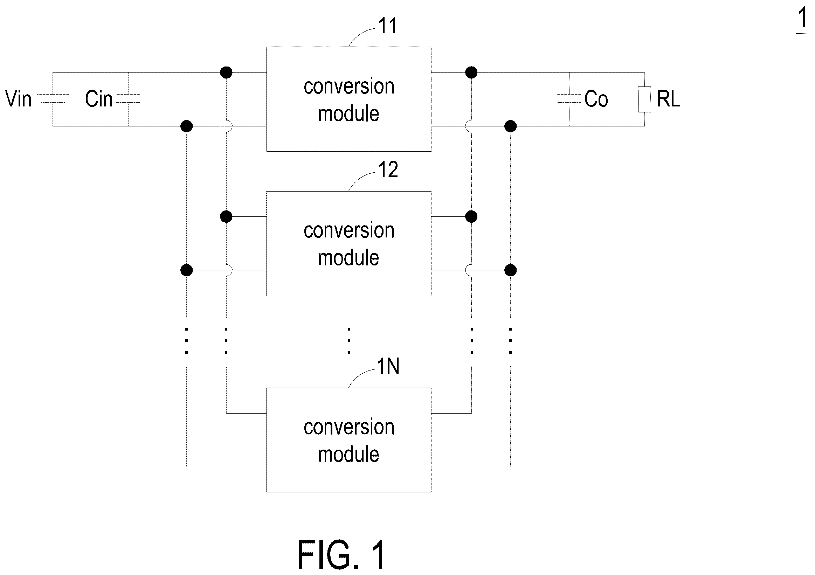

FIG. 1 is a schematic circuit diagram illustrating a multi-module DC-DC converter according to an embodiment of the present disclosure. As shown in FIG. 1, the multi-module DC-DC converter 1 includes N conversion modules 11, 12, ..., 1N and is configured to provide power conversion between a power source Vin and a load RL, where N is an integer greater than 1. In an embodiment, the multi-module DC-DC converter 1 may include an input capacitor Cin, connected in parallel to the power source Vin, and/or an output capacitor Co, connected in parallel to the load RL. In this embodiment, the multiple conversion modules 11-1N adopt an IPOP (input parallel output parallel) configuration, namely input terminals of the conversion modules 11-1N are connected in parallel and output terminals of the conversion modules 11-1N are connected in parallel. However, the present disclosure is not limited thereto. For example, the multiple conversion modules 11-1N may adopt input series output series (ISOS) configuration, input series output parallel (ISOP) configuration, or input parallel output series (IPOS) configuration.

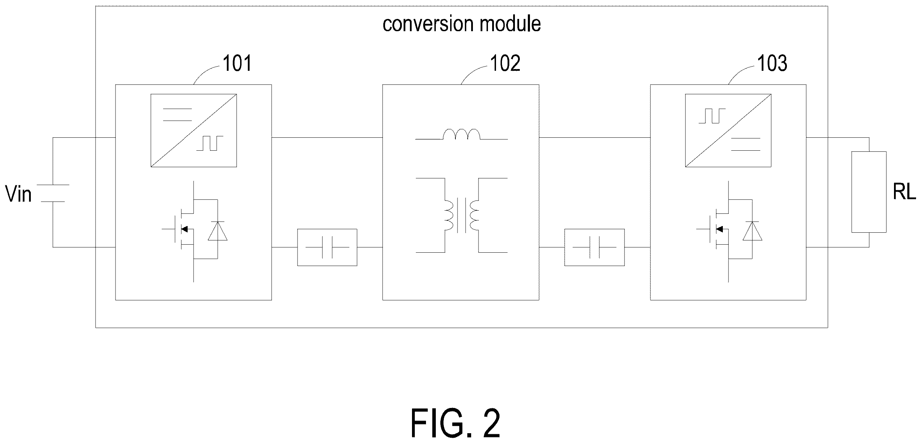

FIG. 2 schematically shows a circuit topology of the conversion module in FIG. 1. As shown in FIG. 2, each of the conversion modules 11-1N includes a DC/AC cell 101, a transformer and inductor cell 102, and an AC/DC cell 103 electrically connected between the power source Vin and the load RL. The DC/AC cell 101 is configured to convert DC signals to AC signals (e.g., high-frequency AC signals), the transformer and inductor cell 102 is configured to do energy processing, and the AC/DC cell 103 is configured to convert AC signals to DC signals. In an embodiment, the conversion module may include a capacitor connected between the DC/AC cell 101 and the transformer and inductor cell 102 and/or a capacitor connected between the transformer and inductor cell 102 and the AC/DC cell 103. These capacitors may be resonant capacitors used in a resonant converter or DC-blocking capacitors, but not limited thereto.

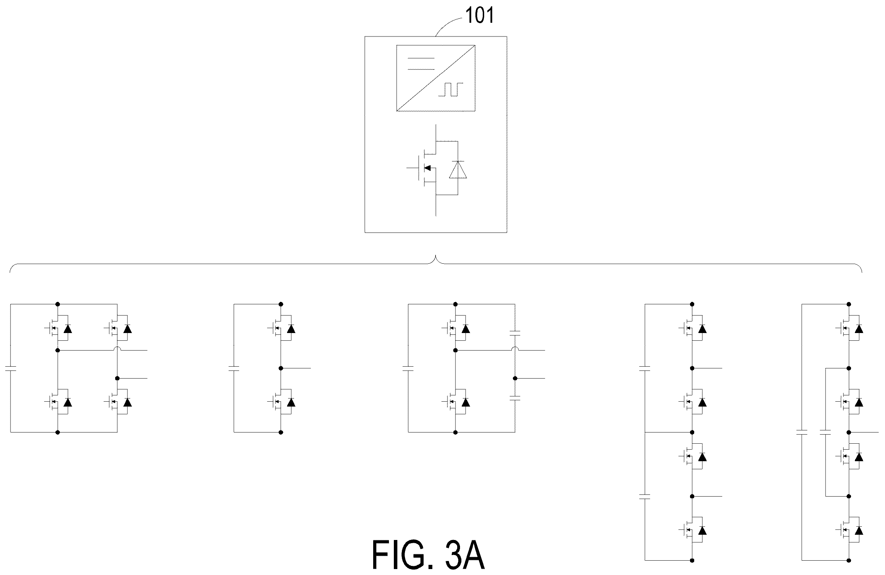

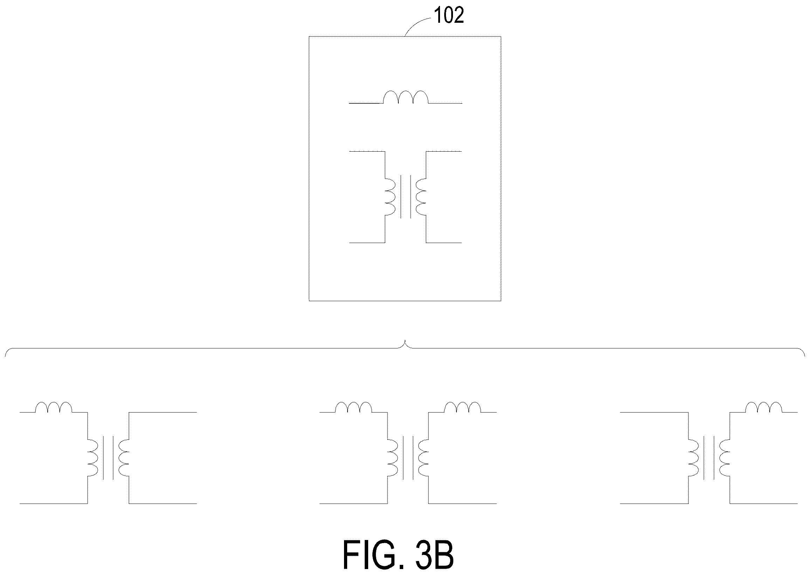

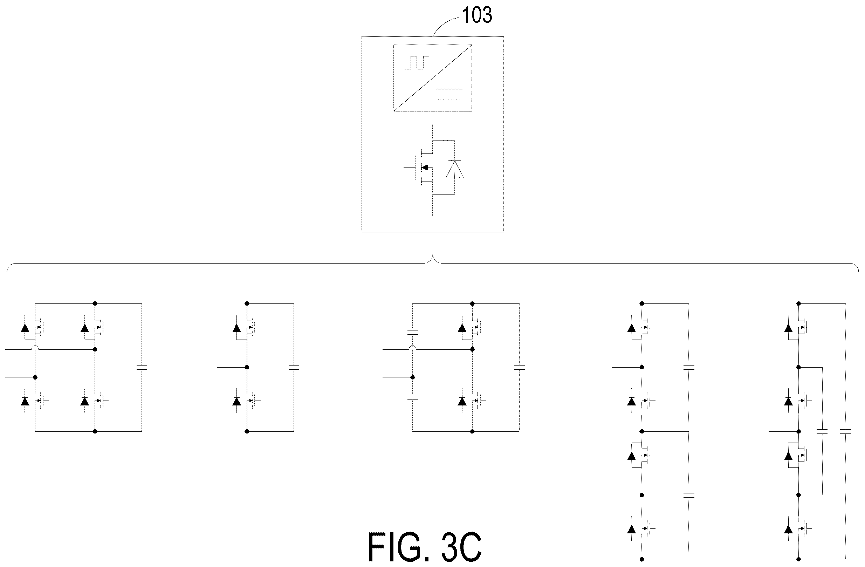

Each of the DC/AC cell 101, the transformer and inductor cell 102, and the AC/DC cell 103 may be implemented by any suitable circuit topology. For example, the DC/AC cell 101 may adopt a full-bridge circuit, a half-bridge circuit with or without a capacitor bridge, a stacked half-bridge circuit, or a flying capacitor three-level circuit as exemplified in FIG. 3A, but not exclusively. The transformer and inductor cell 102 may adopt a primary resonant inductor and transformer, a secondary inductor and transformer, or a combined primary and secondary inductor and transformer as exemplified in FIG. 3B, but not exclusively. The AC/DC cell 103 may adopt a full-bridge circuit, a half-bridge circuit with or without a capacitor bridge, a stacked half-bridge circuit, or a flying capacitor three-level circuit as exemplified in FIG. 3C, but not exclusively.

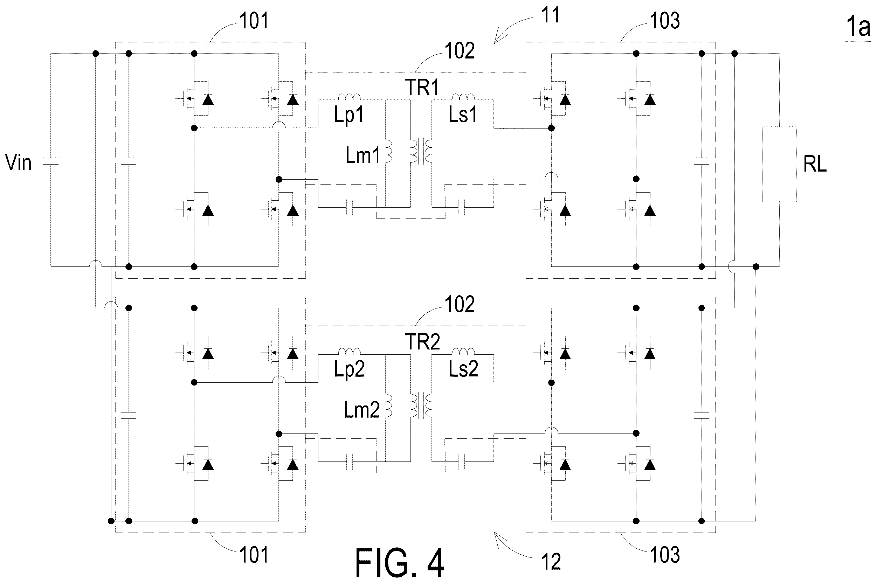

FIG. 4 schematically shows a first implementation of the multi-module DC-DC converter of FIG. 1. In an embodiment, as shown in FIG. 4, N=2, and in each of the conversion modules 11 and 12 of the multi-module DC-DC converter 1a, the DC/AC cell 101 and the AC/DC cell 103 include full-bridge circuits, and the transformer and inductor cell 102 includes a combined primary and secondary inductor and transformer. In specific, the transformer and inductor cell 102 of the conversion module 11 includes a transformer TR1, a primary inductor Lp1, a secondary inductor Ls1, and a magnetizing inductor Lm1, and the transformer and inductor cell 102 of the conversion module 12 includes a transformer TR2, a primary inductor Lp2, a secondary inductor Ls2, and a magnetizing inductor Lm2. The integrated magnetic component for forming the transformer and inductor cells of the conversion modules would be described below.

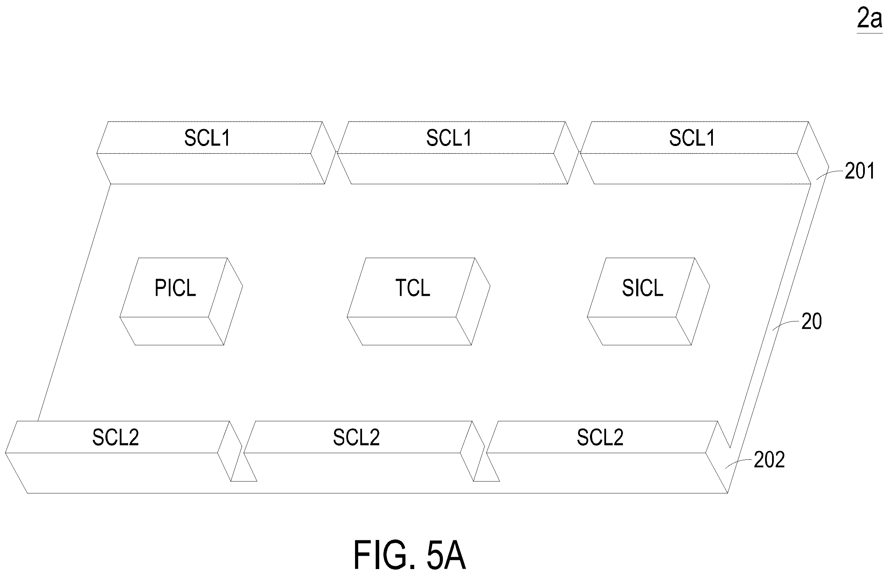

FIG. 5A is a schematic view illustrating a magnetic core of an integrated magnetic component according to a first embodiment of the present disclosure. As shown in FIG. 5A, the magnetic core 2a includes a plate 20 and a primary inductor core leg PICL, a transformer core leg TCL, a secondary inductor core leg SICL, at least one first side core leg SCL1, and at least one second side core leg SCL2 disposed on the plate 20. The magnetic core 2a is assembled with another similar magnetic core or a separate core plate, which is not shown in the figure for sake of clarity, to form a complete structure. The primary inductor core leg PICL is configured to be wound with a primary winding, and the secondary inductor core leg SICL is configured to be wound with a secondary winding. The transformer core leg TCL is configured to be wound with both the primary and secondary windings, which may be stacked to achieve interleaving. The primary inductor core leg PICL, the transformer core leg TCL, and the secondary inductor core leg SICL may be located between the at least one first side core leg SCL1 and the at least one second side core leg SCL2, but not limited thereto. It is noted that the positions of the primary inductor core leg PICL, the transformer core leg TCL, the secondary inductor core leg SICL, the at least one first side core leg SCL1, and the at least one second side core leg SCL2 and the relative position relation thereof are not limited to that shown in the figure, and are actually not limited in the present disclosure. The first side core leg SCL1 and the second side core leg SCL2 are respectively disposed on opposite first and second sides 201 and 202 of the plate 20 of the magnetic core 2a. Each core leg may include a single air gap or segmented air gaps formed by multiple smaller gaps. Further, the cross-sectional shape of each core leg is not limited to square; it may be circular, elliptical, polygonal, or other various shapes.

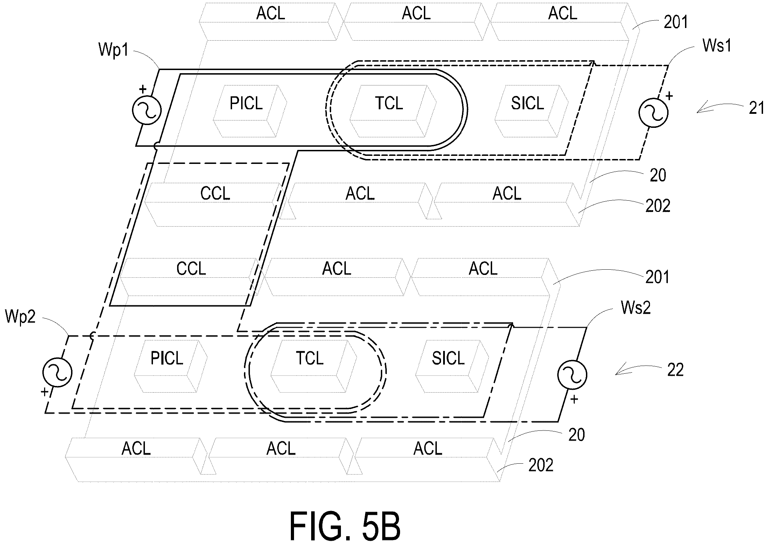

FIG. 5B schematically shows the integrated magnetic component forming the transformer and inductor cells of the conversion modules of FIG. 4 based on the magnetic core shown in FIG. 5A. In this embodiment, as shown in FIG. 5B, the integrated magnetic component includes magnetic cores 21 and 22, primary windings Wp1 and Wp2, and secondary windings Ws1 and Ws2. Each of the magnetic cores 21 and 22 includes three first side core legs disposed at the first side 201 of the plate 20 and three second side core legs disposed at the second side 202 of the plate 20. In these first and second side core legs, one second side core leg of the magnetic core 21 and one first side core leg of the magnetic core 22 adjacent to each other are used as common core legs CCL, and the other first and second side core legs are used as auxiliary core legs ACL. To form the transformer and inductor cell 102 of the conversion module 11 (shown in FIG. 4), the primary winding Wp1 is wound around the primary inductor core leg PICL and the transformer core leg TCL of the magnetic core 21 and two common core legs CCL of the magnetic cores 21 and 22, and the secondary winding Ws1 is wound around the secondary inductor core leg SICL and the transformer core leg TCL of the magnetic core 21. To form the transformer and inductor cell 102 of the conversion module 12 (shown in FIG. 4), the primary winding Wp2 is wound around the primary inductor core leg PICL and the transformer core leg TCL of the magnetic core 22 and two common core legs CCL of the magnetic cores 21 and 22, and the secondary winding Ws2 is wound around the secondary inductor core leg SICL and the transformer core leg TCL of the magnetic core 22. The primary windings Wp1 and Wp2 have the same number of turns and are both wound on the common core legs CCL, and the directions of currents flowing through the primary windings Wp1 and Wp2 are opposite, thereby ensuring that the magnetic fluxes generated by the currents flowing through the primary windings Wp1 and Wp2 cancel each other out. This results in the magnetomotive force (MMF) created by the currents flowing through the primary windings Wp1 and Wp2 being mutually cancelled on the common core legs CCL. Further, the currents flowing through the primary inductors Lp1 and Lp2 are equal, and thus the currents flowing the secondary inductors Ls1 and Ls2 are equal, thereby realizing current balancing between the conversion modules.

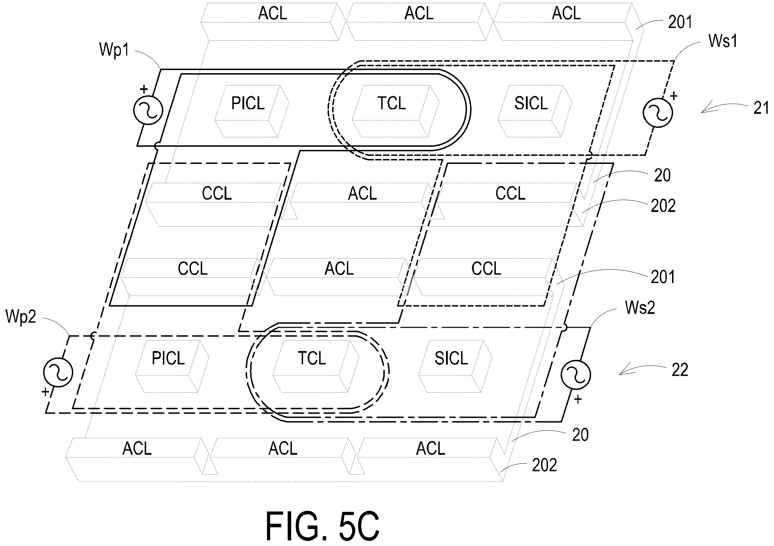

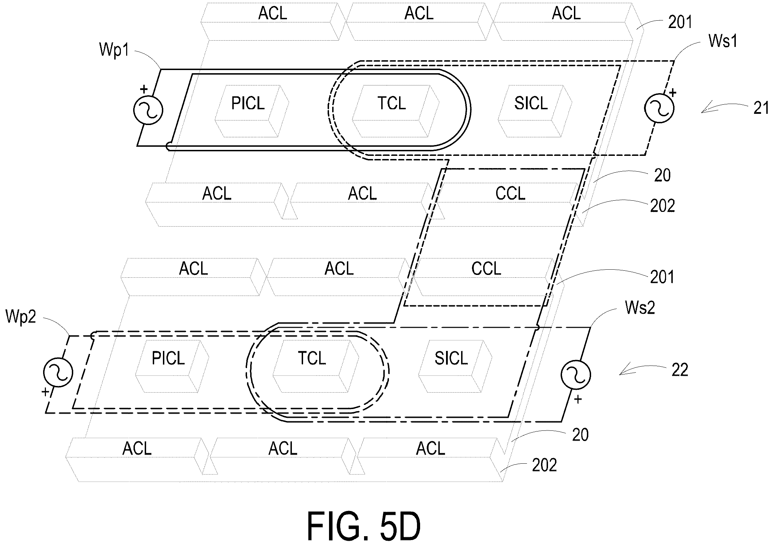

In the embodiment shown in FIG. 5B, a pair of adjacent first and second side core legs are used as common core legs CCL and wound with the primary windings Wp1 and Wp2. In another embodiment, as shown in FIG. 5C, in addition to the common core legs CCL wound with primary windings Wp1 and Wp2, there may be another pair of adjacent first and second side core legs being used as common core legs CCL and wound with the secondary windings Ws1 and Ws2. In further another embodiment, as shown in FIG. 5D, there may be only one pair of adjacent first and second side core legs being used as common core legs CCL and wound with the secondary windings Ws1 and Ws2. Accordingly, it is noted that in two magnetic cores adjacent to each other, at least one pair of adjacent first and second side core legs are used as common core legs CCL and wound with the primary windings or the secondary windings. Consequently, the effect of magnetic flux cancellation and current balancing can be achieved.

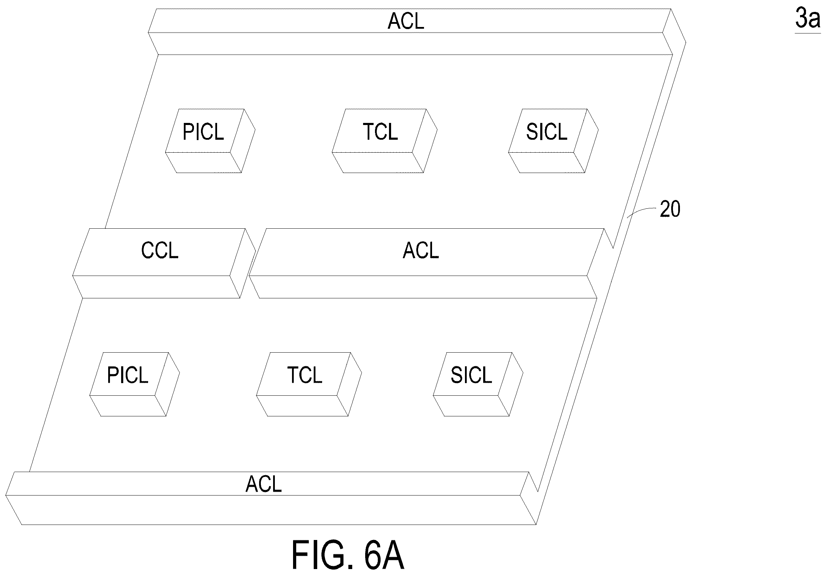

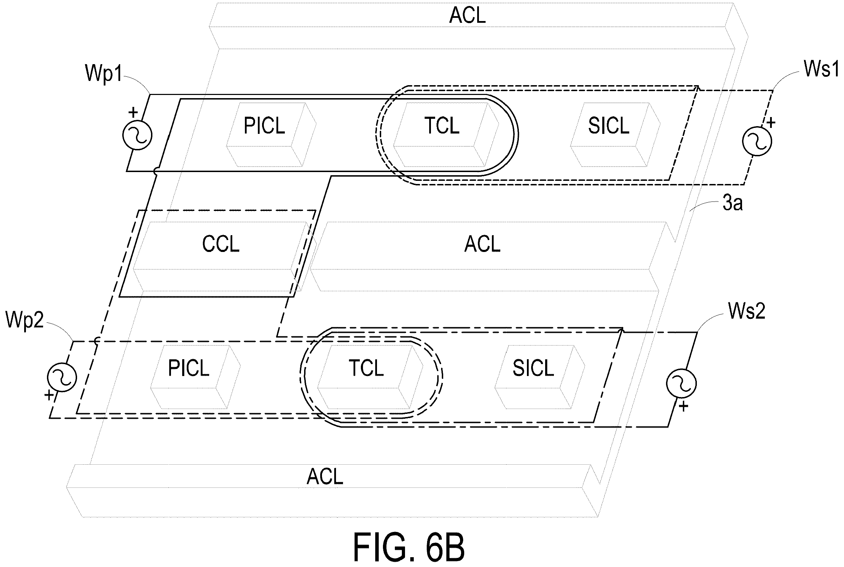

In an embodiment, multiple adjacent plates 20 may be integrated into a single plate, multiple adjacent common core legs CCL may be integrated into a single common core leg, and multiple adjacent auxiliary core legs ACL may be integrated into a single auxiliary core leg. In other words, adjacent magnetic cores may share the plate, common core leg, and auxiliary core leg. For example, FIGS. 6A and 6B schematically show a variant of the integrated magnetic component of FIG. 5B and the corresponding winding arrangement. Please refer to FIG. 6A in conjunction with FIG. 5B. The magnetic cores 21 and 22 of FIG. 5B are integrated into a single magnetic core 3a of FIG. 6A. In particular, based on the magnetic cores 21 and 22 of FIG. 5B, two plates 20 of the magnetic cores 21 and 22 are integrated into one plate 20, three auxiliary core legs ACL at the first side 201 of the plate 20 of the magnetic core 21 are integrated into one auxiliary core leg ACL, and three auxiliary core legs ACL at the second side 202 of the plate 20 of the magnetic core 22 are integrated into one auxiliary core leg ACL. Further, at the second side 202 of the plate 20 of the magnetic core 21 and the first side 201 of the plate 20 of the magnetic core 22, two common core legs CCL wound with primary windings Wp1 and Wp2 are integrated into one common core leg CCL, and four auxiliary core legs ACL are integrated into one auxiliary core leg ACL. The corresponding winding arrangement is shown in FIG. 6B.

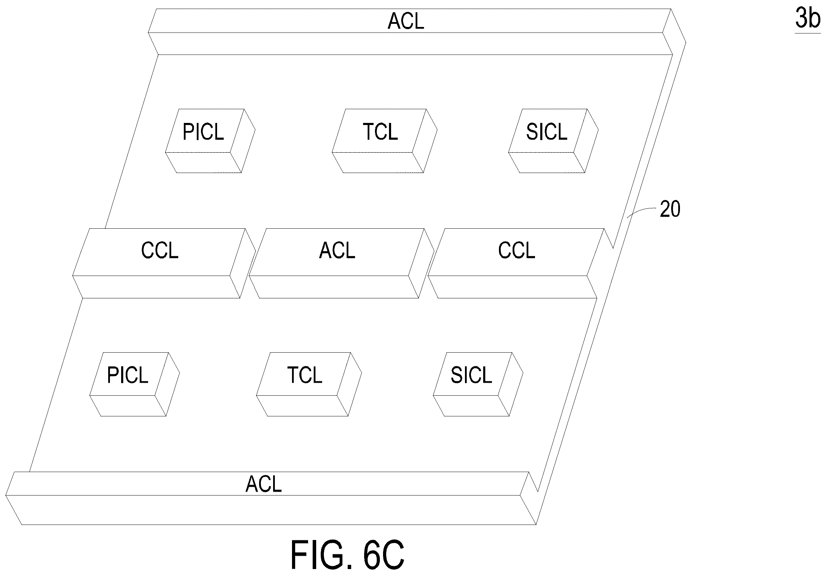

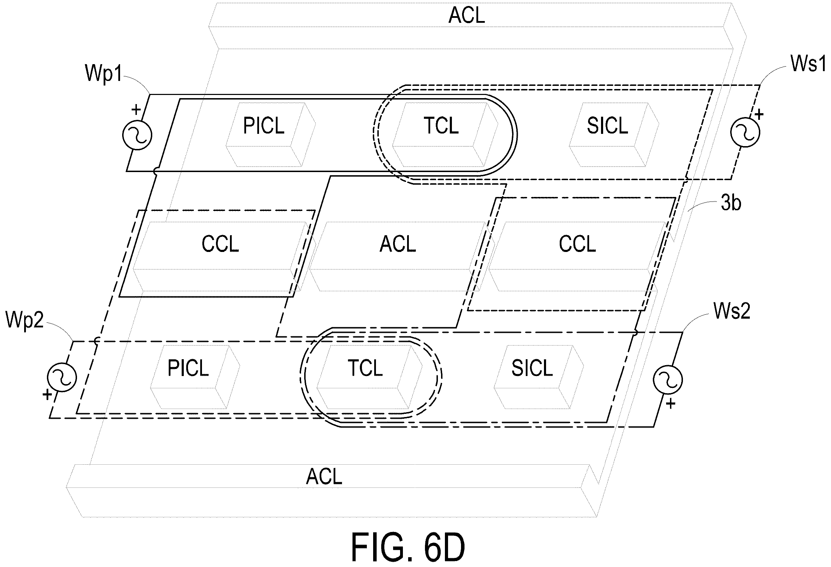

FIGS. 6C and 6D schematically show a variant of the integrated magnetic component of FIG. 5C and the corresponding winding arrangement. Please refer to FIG. 6C in conjunction with FIG. 5C. The magnetic cores 21 and 22 of FIG. 5C are integrated into a single magnetic core 3b of FIG. 6C. In particular, based on the magnetic cores 21 and 22 of FIG. 5C, two plates 20 of the magnetic cores 21 and 22 are integrated into one plate 20, three auxiliary core legs ACL at the first side 201 of the plate 20 of the magnetic core 21 are integrated into one auxiliary core leg ACL, and three auxiliary core legs ACL at the second side 202 of the plate 20 of the magnetic core 22 are integrated into one auxiliary core leg ACL. Further, at the second side 202 of the plate 20 of the magnetic core 21 and the first side 201 of the plate 20 of the magnetic core 22, two common core legs CCL wound with the primary windings Wp1 and Wp2 are integrated into one common core leg CCL, two common core legs CCL wound with the secondary windings Ws1 and Ws2 are integrated into another common core leg CCL, and two auxiliary core legs ACL are integrated into one auxiliary core leg ACL. The corresponding winding arrangement is shown in FIG. 6D.

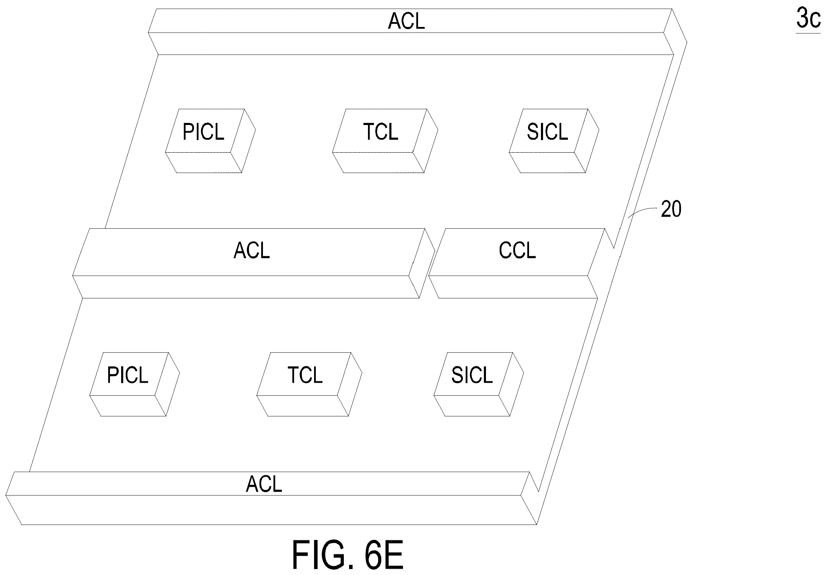

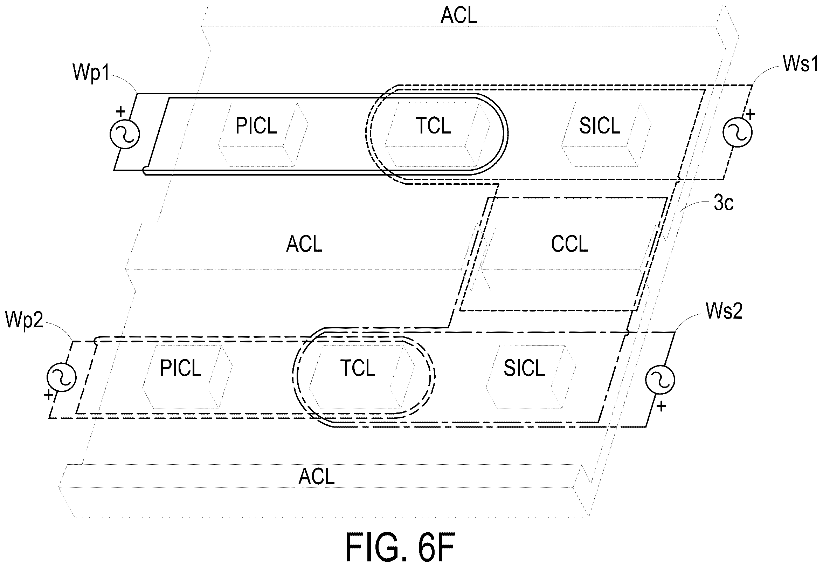

FIGS. 6E and 6F schematically show a variant of the integrated magnetic component of FIG. 5D and the corresponding winding arrangement. Please refer to FIG. 6E in conjunction with FIG. 5D. The magnetic cores 21 and 22 of FIG. 5D are integrated into a single magnetic core 3c of FIG. 6E. In particular, based on the magnetic cores 21 and 22 of FIG. 5D, two plates 20 of the magnetic cores 21 and 22 are integrated into one plate 20, three auxiliary core legs ACL at the first side 201 of the plate 20 of the magnetic core 21 are integrated into one auxiliary core leg ACL, and three auxiliary core legs ACL at the second side 202 of the plate 20 of the magnetic core 22 are integrated into one auxiliary core leg ACL. Further, at the second side 202 of the plate 20 of the magnetic core 21 and the first side 201 of the plate 20 of the magnetic core 22, two common core legs CCL wound with secondary windings Ws1 and Ws2 are integrated into one common core leg CCL, and four auxiliary core legs ACL are integrated into one auxiliary core leg ACL. The corresponding winding arrangement is shown in FIG. 6F.

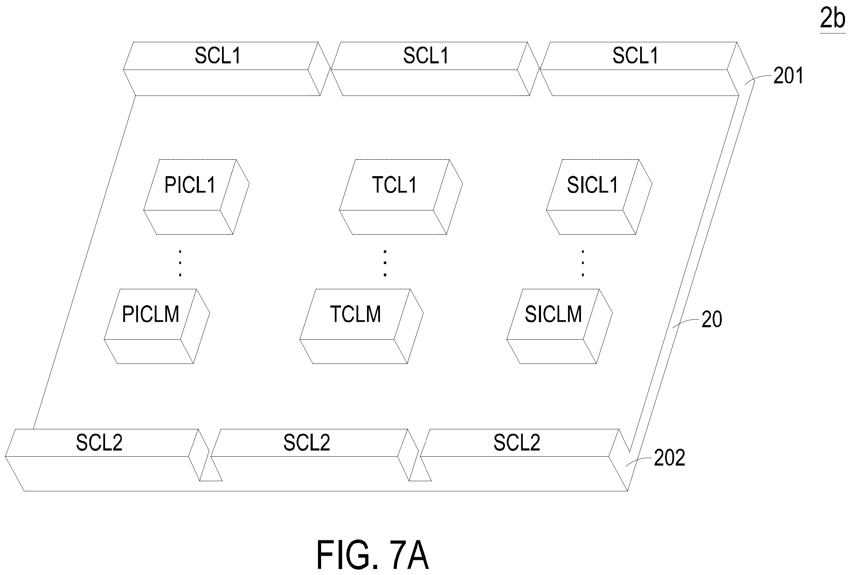

FIG. 7A is a schematic view illustrating a magnetic core of an integrated magnetic component according to a second embodiment of the present disclosure. In FIG. 7A, the component parts and elements corresponding to those of FIG. 5A are designated by identical numeral references, and detailed descriptions thereof are omitted herein. In the present disclosure, the number of the primary and secondary inductor core legs and the transformer core legs are not limited. For example, as shown in FIG. 7A, the magnetic core 2b includes M primary inductor core legs PICL1-PICLM, M transformer core legs TCL1-TCLM, and M secondary inductor core legs SICL1-SICLM, where M is an integer greater than 1.

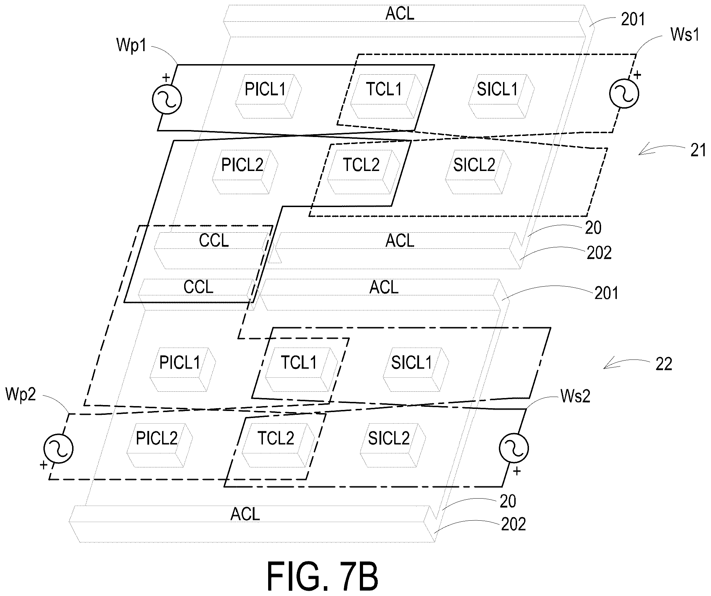

Taking M=2 as an example. FIG. 7B schematically shows the integrated magnetic component forming the transformer and inductor cells of the conversion modules of FIG. 4 based on the magnetic core shown in FIG. 7A. In this embodiment, as shown in FIG. 7B, the integrated magnetic component includes magnetic cores 21 and 22, primary windings Wp1 and Wp2, and secondary windings Ws1 and Ws2. One second side core leg of the magnetic core 21 and one first side core leg of the magnetic core 22 adjacent to each other are used as common core legs CCL, and the other first and second side core legs are used as auxiliary core legs ACL. To form the transformer and inductor cell 102 of the conversion module 11 (shown in FIG. 4), the primary winding Wp1 is wound around the primary inductor core legs PICL1, PICL2 and the transformer core legs TCL1, TCL2 of the magnetic core 21 and two common core legs CCL of the magnetic cores 21 and 22, and the secondary winding Ws1 is wound around the secondary inductor core legs SICL1, SICL2 and the transformer core legs TCL1, TCL2 of the magnetic core 21. To form the transformer and inductor cell 102 of the conversion module 12 (shown in FIG. 4), the primary winding Wp2 is wound around the primary inductor core legs PICL1, PICL2 and the transformer core legs TCL1, TCL2 of the magnetic core 22 and two common core legs CCL of the magnetic cores 21 and 22, and the secondary winding Ws2 is wound around the secondary inductor core legs SICL1, SICL2 and the transformer core legs TCL1, TCL2 of the magnetic core 22. It is noted that each winding is wound in a figure-eight pattern. The primary windings Wp1 and Wp2 have the same number of turns and are both wound on the common core legs CCL, and the directions of currents flowing through the primary windings Wp1 and Wp2 are opposite, thereby ensuring that the magnetic fluxes generated by the currents flowing through the primary windings Wp1 and Wp2 cancel each other out. This results in the MMF created by the currents flowing through the primary windings Wp1 and Wp2 being mutually cancelled on the common core legs CCL. Further, the currents flowing through the primary inductors Lp1 and Lp2 are equal, and thus the currents flowing the secondary inductors Ls1 and Ls2 are equal, thereby realizing current balancing between the conversion modules. Additionally, the adjacent first or second side core legs of the magnetic core, which are not wound with windings, may be integrated into a single core leg. For example, in the magnetic core 21, three first side core legs may be integrated into one auxiliary core leg ACL, and two unwound second side core legs may be integrated into another auxiliary core leg ACL. Similarly, in the magnetic core 22, two unwound first side core legs may be integrated into one auxiliary core leg ACL, and three second side core legs may be integrated into another auxiliary core leg ACL.

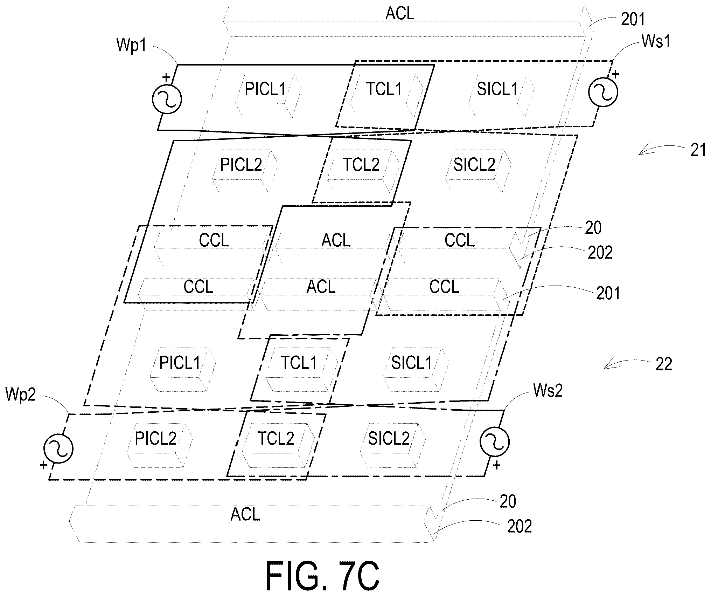

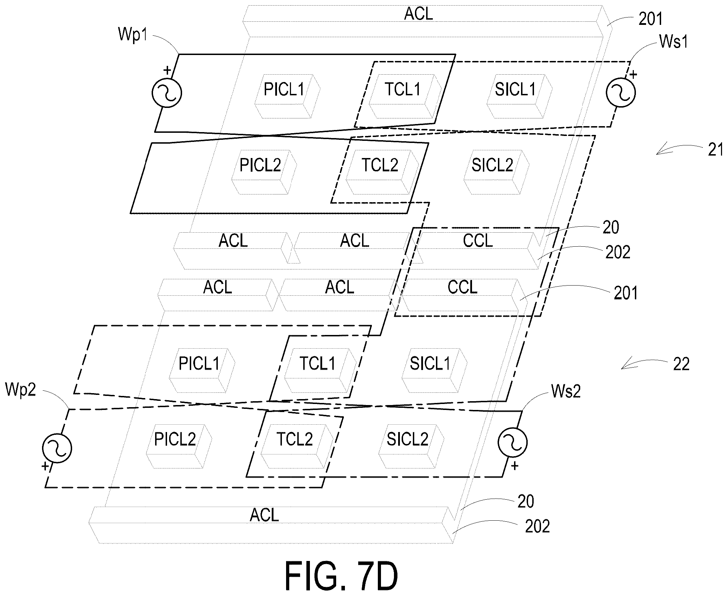

In the embodiment shown in FIG. 7B, a pair of adjacent first and second side core legs are used as common core legs CCL and wound with the primary windings Wp1 and Wp2. In another embodiment, as shown in FIG. 7C, in addition to the common core legs CCL wound with primary windings Wp1 and Wp2, there may be another pair of adjacent first and second side core legs being used as common core legs CCL and wound with the secondary windings Ws1 and Ws2. In further another embodiment, as shown in FIG. 7D, there may be only one pair of adjacent first and second side core legs being used as common core legs CCL and wound with the secondary windings Ws1 and Ws2. Accordingly, it is noted that in two magnetic cores adjacent to each other, at least one pair of adjacent first and second side core legs are used as common core legs CCL and wound with the primary windings or the secondary windings. Consequently, the effect of magnetic flux cancellation and current balancing can be achieved.

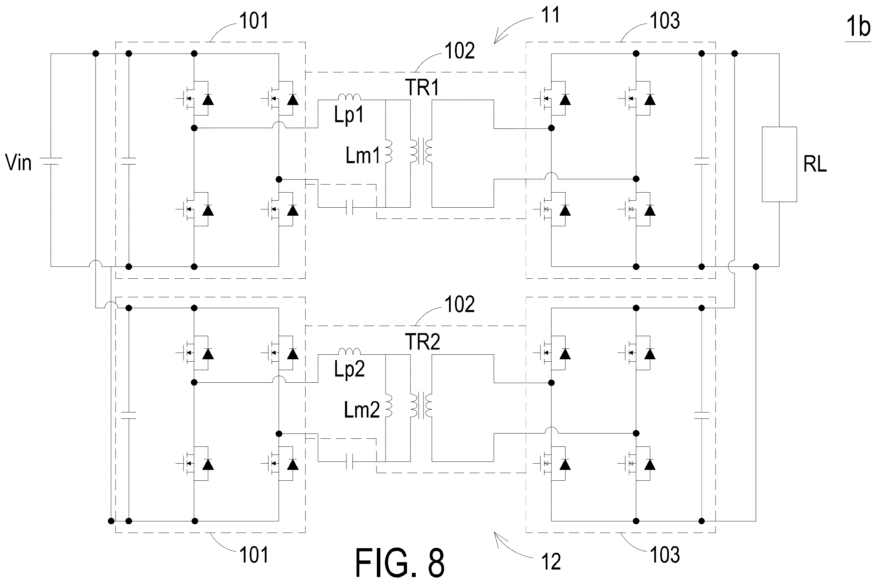

FIG. 8 schematically shows a second implementation of the multi-module DC-DC converter of FIG. 1. In FIG. 8, the component parts and elements corresponding to those of FIG. 4 are designated by identical numeral references, and detailed descriptions thereof are omitted herein. Compared with the multi-module DC-DC converter 1a of FIG. 4, in multi-module DC-DC converter 1b of FIG. 8, the secondary inductor and capacitor at the secondary side of the transformer are omitted.

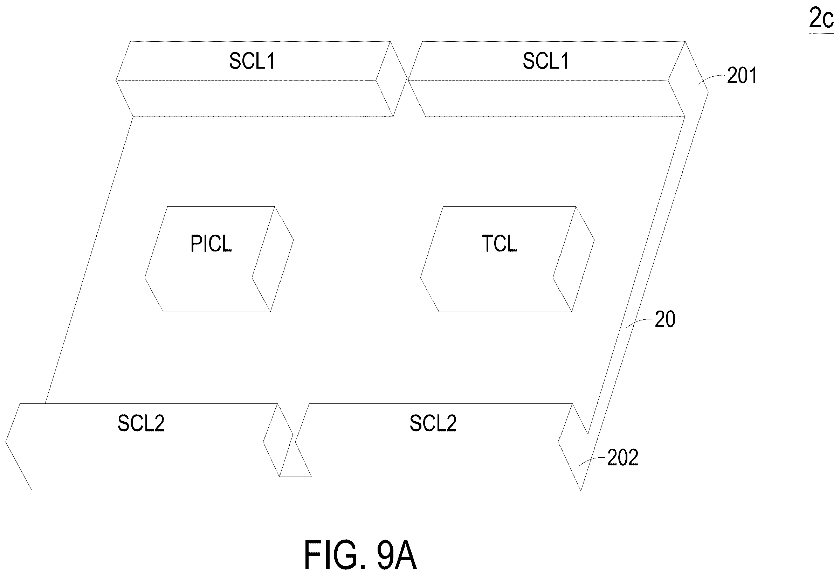

FIG. 9A is a schematic view illustrating a magnetic core of an integrated magnetic component according to a third embodiment of the present disclosure. In FIG. 9A, the component parts and elements corresponding to those of FIG. 5A are designated by identical numeral references, and detailed descriptions thereof are omitted herein. Compared with the magnetic core 2a of FIG. 5A, in magnetic core 2c of FIG. 9A, the secondary inductor core leg is omitted.

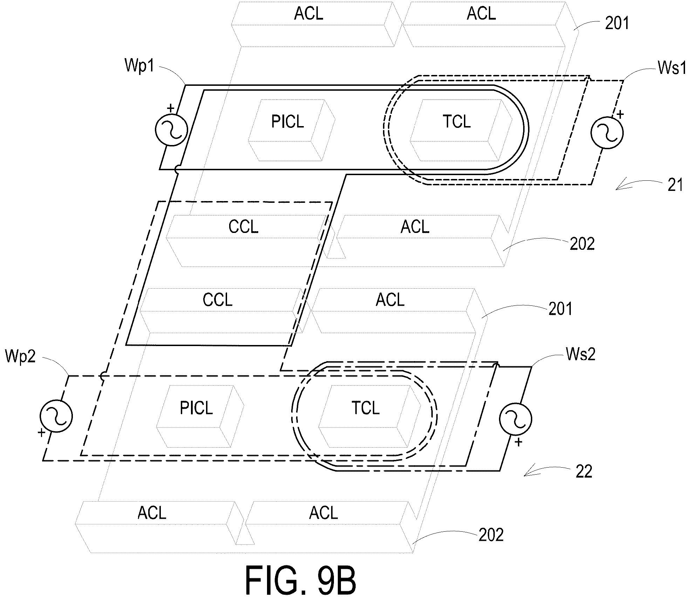

FIG. 9B schematically shows the integrated magnetic component forming the transformer and inductor cells of the conversion modules of FIG. 8 based on the magnetic core shown in FIG. 9A. In this embodiment, as shown in FIG. 9B, the integrated magnetic component includes magnetic cores 21 and 22, primary windings Wp1 and Wp2, and secondary windings Ws1 and Ws2. Each of the magnetic cores 21 and 22 includes two first side core legs disposed at the first side 201 of the plate 20 and two second side core legs disposed at the second side 202 of the plate 20. In these first and second side core legs, one second side core leg of the magnetic core 21 and one first side core leg of the magnetic core 22 adjacent to each other are used as common core legs CCL, and the other first and second side core legs are used as auxiliary core legs ACL. To form the transformer and inductor cell 102 of the conversion module 11 (shown in FIG. 8), the primary winding Wp1 is wound around the primary inductor core leg PICL and the transformer core leg TCL of the magnetic core 21 and two common core legs CCL of the magnetic cores 21 and 22, and the secondary winding Ws1 is wound around the transformer core leg TCL of the magnetic core 21. To form the transformer and inductor cell 102 of the conversion module 12 (shown in FIG. 8), the primary winding Wp2 is wound around the primary inductor core leg PICL and the transformer core leg TCL of the magnetic core 22 and two common core legs CCL of the magnetic cores 21 and 22, and the secondary winding Ws2 is wound around the transformer core leg TCL of the magnetic core 22. The primary windings Wp1 and Wp2 have the same number of turns and are both wound on the common core legs CCL, and the directions of currents flowing through the primary windings Wp1 and Wp2 are opposite, thereby ensuring that the magnetic fluxes generated by the currents flowing through the primary windings Wp1 and Wp2 cancel each other out. This results in the MMF created by the currents flowing through the primary windings Wp1 and Wp2 being mutually cancelled on the common core legs CCL. Further, the currents flowing through the primary inductors Lp1 and Lp2 are equal, thereby realizing current balancing between the conversion modules.

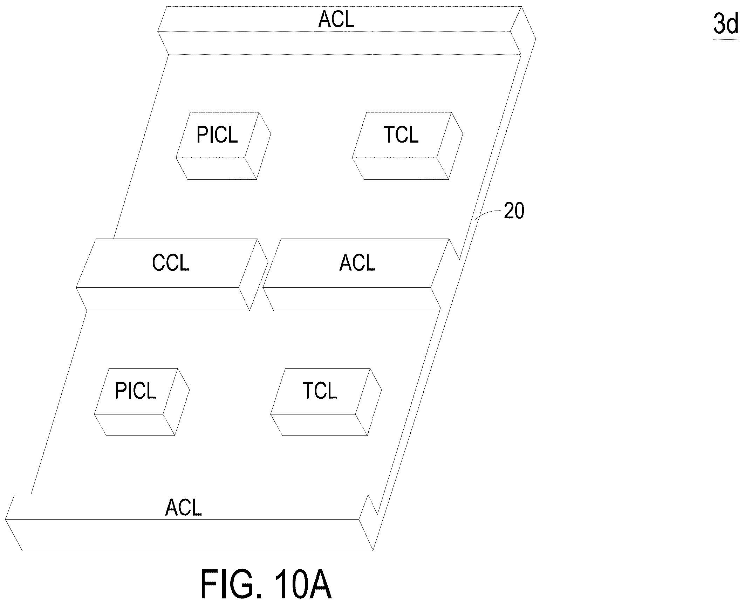

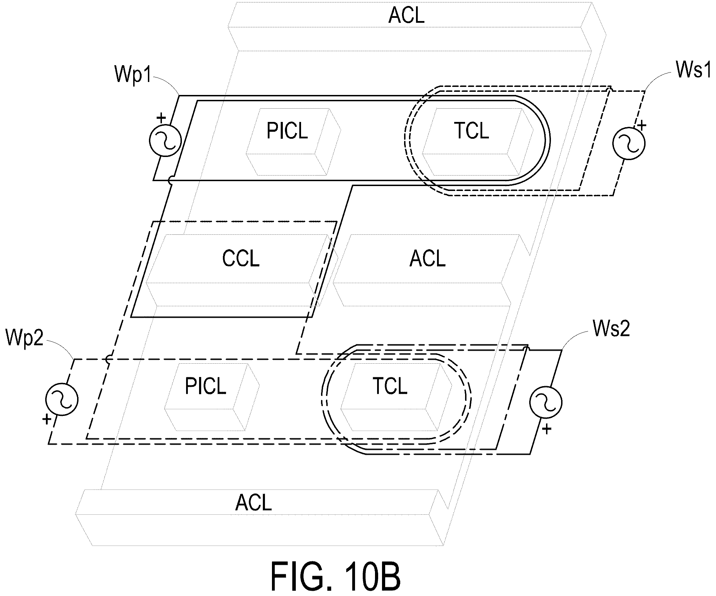

In an embodiment, adjacent magnetic cores may share the plate, common core leg, and auxiliary core leg. For example, FIGS. 10A and 10B schematically show a variant of the integrated magnetic component of FIG. 9B and the corresponding winding arrangement. Please refer to FIG. 10A in conjunction with FIG. 9B. The magnetic cores 21 and 22 of FIG. 9B are integrated into a single magnetic core 3d of FIG. 10A. In particular, based on the magnetic cores 21 and 22 of FIG. 9B, two plates 20 of the magnetic cores 21 and 22 are integrated into one plate 20, two auxiliary core legs ACL at the first side 201 of the plate 20 of the magnetic core 21 are integrated into one auxiliary core leg ACL, and two auxiliary core legs ACL at the second side 202 of the plate 20 of the magnetic core 22 are integrated into one auxiliary core leg ACL. Further, at the second side 202 of the plate 20 of the magnetic core 21 and the first side 201 of the plate 20 of the magnetic core 22, two common core legs CCL wound with primary windings Wp1 and Wp2 are integrated into one common core leg CCL, and two auxiliary core legs ACL are integrated into one auxiliary core leg ACL. The corresponding winding arrangement is shown in FIG. 10B.

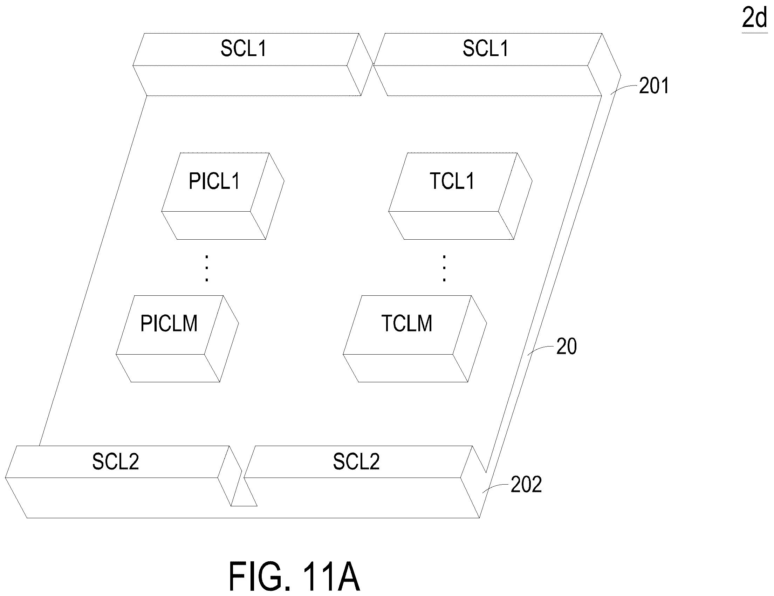

FIG. 11A is a schematic view illustrating a magnetic core of an integrated magnetic component according to a fourth embodiment of the present disclosure. In FIG. 11A, the component parts and elements corresponding to those of FIG. 9A are designated by identical numeral references, and detailed descriptions thereof are omitted herein. In the present disclosure, the number of the primary and secondary inductor core legs and the transformer core legs are not limited. For example, as shown in FIG. 11A, the magnetic core 2d includes M primary inductor core legs PICL1-PICLM, and M transformer core legs TCL1-TCLM.

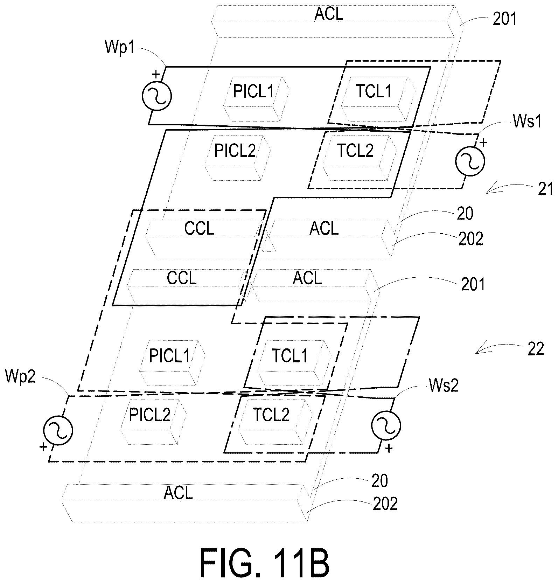

Taking M=2 as an example. FIG. 11B schematically shows the integrated magnetic component forming the transformer and inductor cells of the conversion modules of FIG. 8 based on the magnetic core shown in FIG. 11A. In this embodiment, as shown in FIG. 11B, the integrated magnetic component includes magnetic cores 21 and 22, primary windings Wp1 and Wp2, and secondary windings Ws1 and Ws2. One second side core leg of the magnetic core 21 and one first side core leg of the magnetic core 22 adjacent to each other are used as common core legs CCL, and the other first and second side core legs are used as auxiliary core legs ACL. To form the transformer and inductor cell 102 of the conversion module 11 (shown in FIG. 8), the primary winding Wp1 is wound around the primary inductor core legs PICL1, PICL2 and the transformer core legs TCL1, TCL2 of the magnetic core 21 and two common core legs CCL of the magnetic cores 21 and 22, and the secondary winding Ws1 is wound around the transformer core legs TCL1, TCL2 of the magnetic core 21. To form the transformer and inductor cell 102 of the conversion module 12 (shown in FIG. 8), the primary winding Wp2 is wound around the primary inductor core legs PICL1, PICL2 and the transformer core legs TCL1, TCL2 of the magnetic core 22 and two common core legs CCL of the magnetic cores 21 and 22, and the secondary winding Ws2 is wound around the transformer core legs TCL1, TCL2 of the magnetic core 22. It is noted that each winding is wound in a figure-eight pattern. The primary windings Wp1 and Wp2 have the same number of turns and are both wound on the common core legs CCL, and the directions of currents flowing through the primary windings Wp1 and Wp2 are opposite, thereby ensuring that the magnetic fluxes generated by the currents flowing through the primary windings Wp1 and Wp2 cancel each other out. This results in the MMF created by the currents flowing through the primary windings Wp1 and Wp2 being mutually cancelled on the common core legs CCL. Further, the currents flowing through the primary inductors Lp1 and Lp2 are equal, thereby realizing current balancing between the conversion modules. Additionally, the adjacent first or second side core legs of the magnetic core, which are not wound with windings, may be integrated into a single core leg. For example, in the magnetic core 21, two first side core legs may be integrated into one auxiliary core leg ACL, and in the magnetic core 22, two second side core legs may be integrated into one auxiliary core leg ACL.

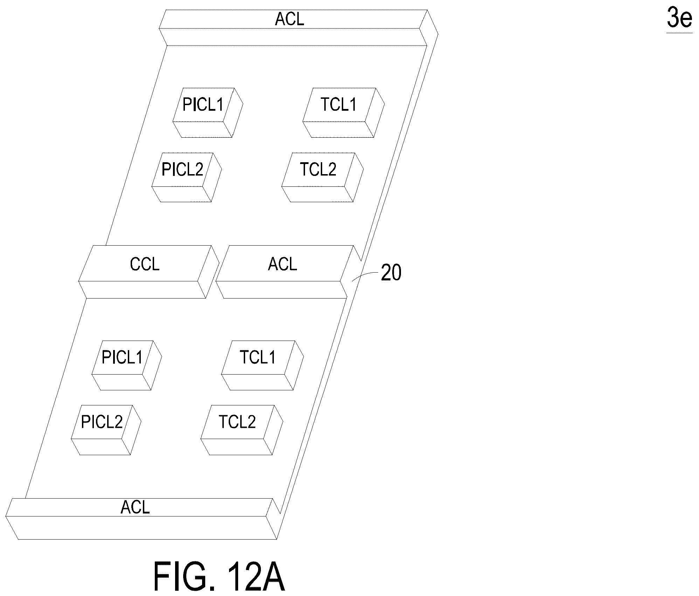

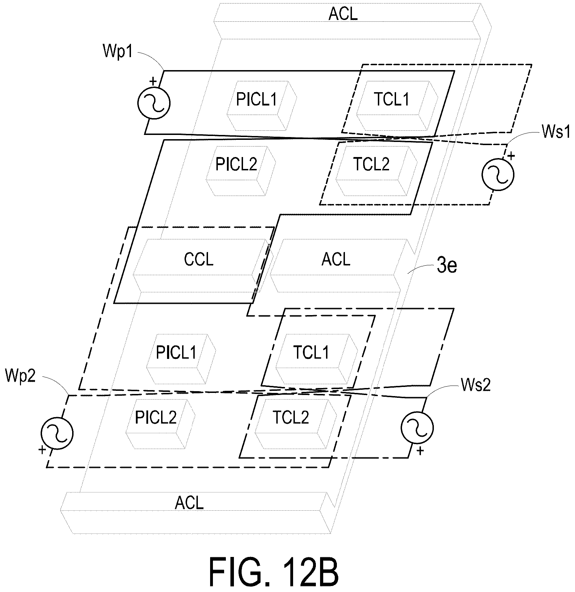

In an embodiment, adjacent magnetic cores may share the plate, common core leg, and auxiliary core leg. For example, FIGS. 12A and 12B schematically show a variant of the integrated magnetic component of FIG. 11B and the corresponding winding arrangement. Please refer to FIG. 12A in conjunction with FIG. 11B. The magnetic cores 21 and 22 of FIG. 11B are integrated into a single magnetic core 3e of FIG. 12A. In particular, based on the magnetic cores 21 and 22 of FIG. 11B, two plates 20 of the magnetic cores 21 and 22 are integrated into one plate 20. Further, at the second side 202 of the plate 20 of the magnetic core 21 and the first side 201 of the plate 20 of the magnetic core 22, two common core legs CCL wound with primary windings Wp1 and Wp2 are integrated into one common core leg CCL, and two auxiliary core legs ACL are integrated into one auxiliary core leg ACL. The corresponding winding arrangement is shown in FIG. 12B.

In the embodiments shown in FIGS. 8-12B, the transformer and inductor cell of each conversion module includes the primary inductor and doesn't include the secondary inductor. In another embodiment, the transformer and inductor cell of each conversion module may include the secondary inductor and doesn't include the primary inductor. The corresponding integrated magnetic component may be implemented by replacing the primary inductor core leg in FIGS. 9A-12B by the secondary inductor core leg. Further, the primary winding is wound around the transformer core leg, and the secondary winding is wound around the secondary inductor core leg and the common core leg.

In addition, the integrated magnetic components in the above embodiments are exemplified under the circumstance that the multi-module DC-DC converter includes two conversion modules, i.e., N=2. When the N is greater than 2, in any two adjacent conversion modules, the primary or secondary windings are wound around the common core leg.

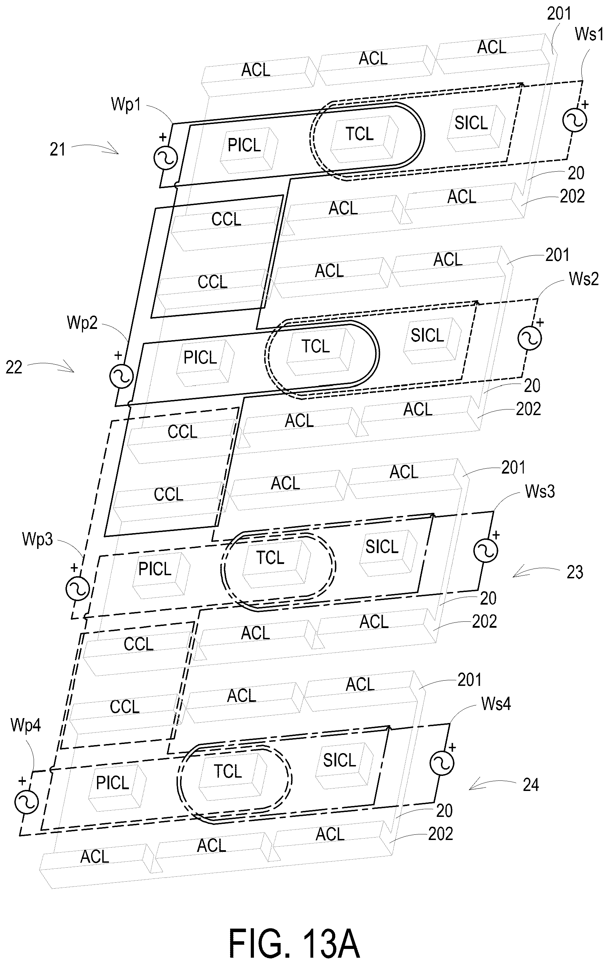

As an example, FIG. 13A schematically shows the integrated magnetic component forming the transformer and inductor cells of four conversion modules based on the magnetic core shown in FIG. 5A. In this embodiment, N equals four, namely the multi-module DC-DC converter includes four conversion modules, and the transformer and inductor cell of each conversion module includes primary and secondary inductors. As shown in FIG. 13A, the integrated magnetic component includes magnetic cores 21, 22, 23 and 24, primary windings Wp1, Wp2, Wp3 and Wp4, and secondary windings Ws1, Ws2, Ws3 and Ws4. A pair of adjacent first and second side core legs of any two adjacent magnetic cores are used as common core legs CCL, and the other first and second side core legs are used as auxiliary core legs ACL. To form the transformer and inductor cell of the first conversion module, the primary winding Wp1 is wound around the primary inductor core leg PICL and the transformer core leg TCL of the magnetic core 21 and two common core legs CCL of the magnetic cores 21 and 22, and the secondary winding Ws1 is wound around the secondary inductor core leg SICL and the transformer core leg TCL of the magnetic core 21. To form the transformer and inductor cell of the second conversion module, the primary winding Wp2 is wound around the primary inductor core leg PICL and the transformer core leg TCL of the magnetic core 22 and four common core legs CCL of the magnetic cores 21, 22 and 23, and the secondary winding Ws2 is wound around the secondary inductor core leg SICL and the transformer core leg TCL of the magnetic core 22. To form the transformer and inductor cell of the third conversion module, the primary winding Wp3 is wound around the primary inductor core leg PICL and the transformer core leg TCL of the magnetic core 23 and four common core legs CCL of the magnetic cores 22, 23 and 24, and the secondary winding Ws3 is wound around the secondary inductor core leg SICL and the transformer core leg TCL of the magnetic core 23. To form the transformer and inductor cell of the fourth conversion module, the primary winding Wp4 is wound around the primary inductor core leg PICL and the transformer core leg TCL of the magnetic core 24 and two common core legs CCL of the magnetic cores 23 and 24, and the secondary winding Ws4 is wound around the secondary inductor core leg SICL and the transformer core leg TCL of the magnetic core 24. The primary windings Wp1, Wp2, Wp3 and Wp4 all have the same number of turns and are wound on the common core legs CCL. Consequently, the effect of magnetic flux cancellation and current balancing can be achieved.

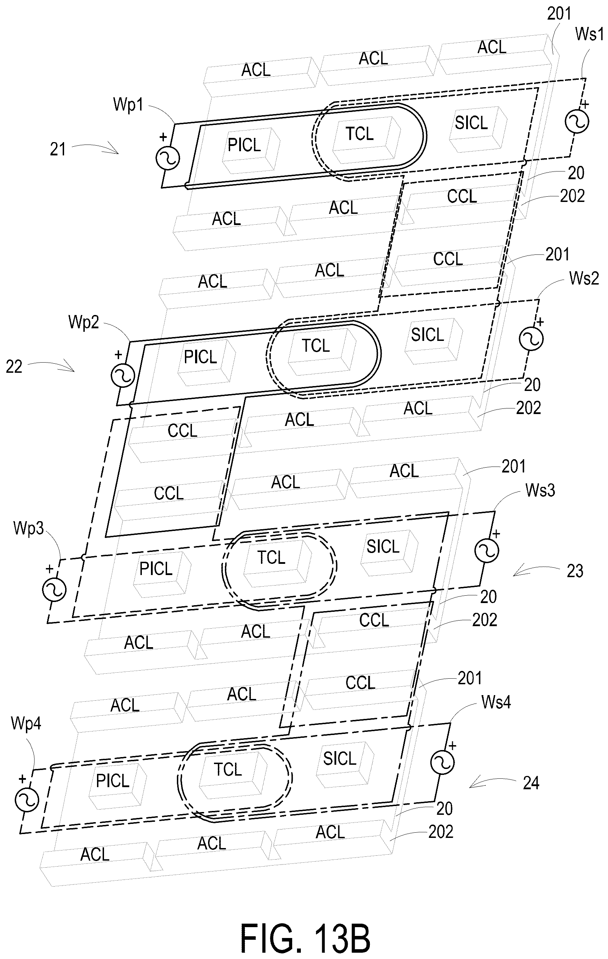

Additionally, the common core legs CCL are not limited to be all wound with primary windings or secondary windings. Specifically, some adjacent common core legs CCL may be wound with primary windings, and some adjacent common core legs CCL may be wound with secondary windings. As an example, FIG. 13B schematically shows a variant of the integrated magnetic component of FIG. 13A. In the embodiment shown in FIG. 13B, the adjacent common core legs CCL of the magnetic cores 21 and 22 are wound with the secondary windings Ws1 and Ws2, the adjacent common core legs CCL of the magnetic cores 22 and 23 are wound with the primary windings Wp2 and Wp3, and the adjacent common core legs CCL of the magnetic cores 23 and 24 are wound with the secondary windings Ws3 and Ws4. In addition, in the integrated magnetic components shown in FIGS. 13A and 13B, the adjacent plates may be integrated, and the adjacent common or auxiliary core legs may be integrated, so as to enhance the performance.

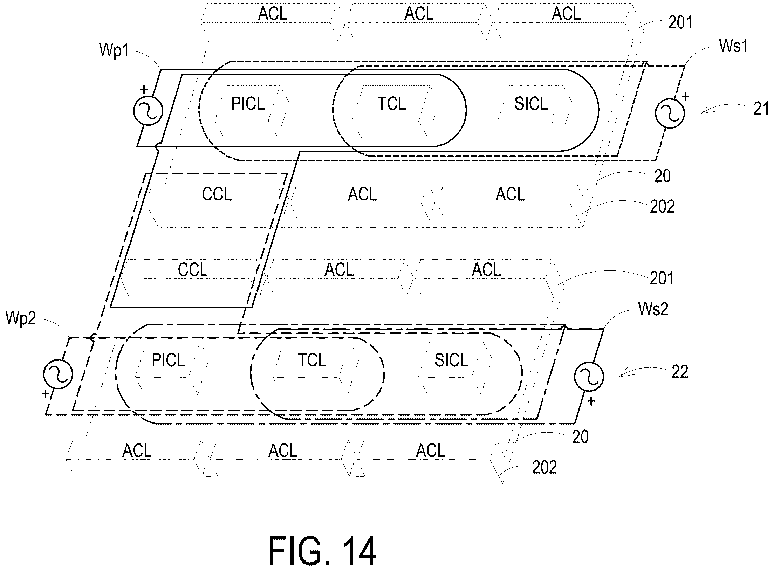

In an embodiment, in order to further increase the coupling between the primary and secondary windings, some of the primary windings may be wound across the secondary inductor core leg, and some of the secondary windings may be wound across the primary inductor core leg. As an example, FIG. 14 schematically shows a variant of the integrated magnetic component of FIG. 5B. In the embodiment shown in FIG. 14, the primary winding Wp1 is wound around the primary inductor core leg PICL, the transformer core leg TCL and the secondary inductor core leg SICL of the magnetic core 21, and the common core legs CCL of the magnetic cores 21 and 22. The secondary winding Ws1 is wound around the primary inductor core leg PICL, the transformer core leg TCL, and the secondary inductor core leg SICL of the magnetic core 21. The primary winding Wp2 is wound around the primary inductor core leg PICL, the transformer core leg TCL and the secondary inductor core leg SICL of the magnetic core 22, and the common core legs CCL of the magnetic cores 21 and 22. The secondary winding Ws2 is wound around the primary inductor core leg PICL, the transformer core leg TCL, and the secondary inductor core leg SICL of the magnetic core 22. To achieve built-in leakage inductance, the turns ratio across the primary inductor core leg PICL, the transformer core leg TCL, and the secondary inductor core leg SICL cannot be identical.

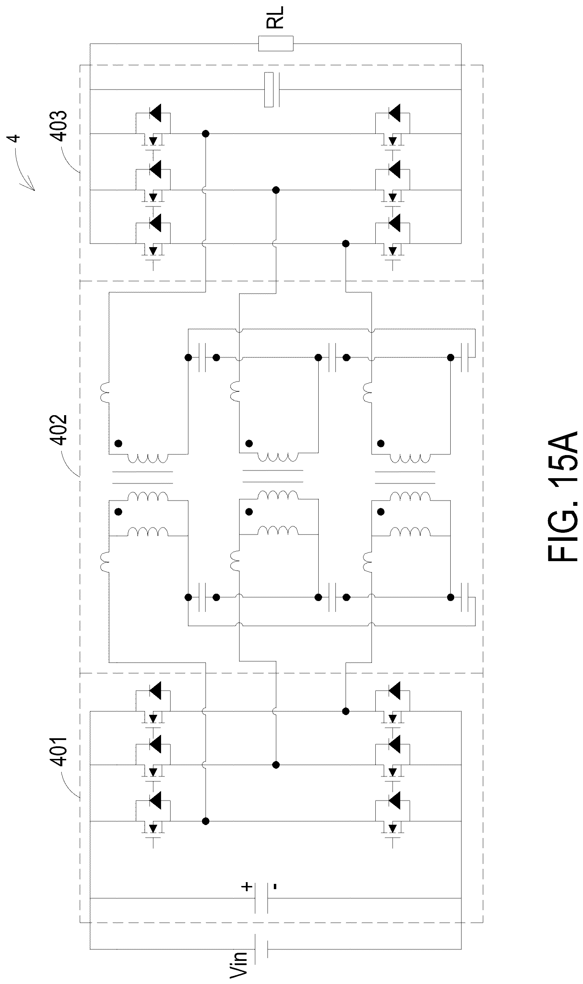

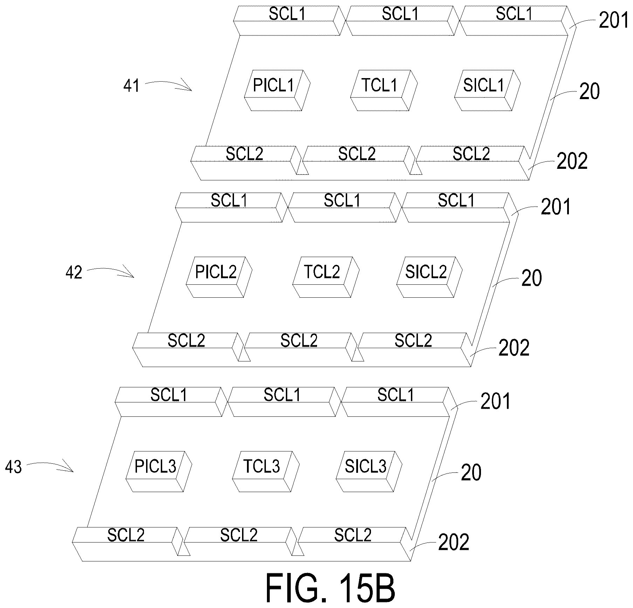

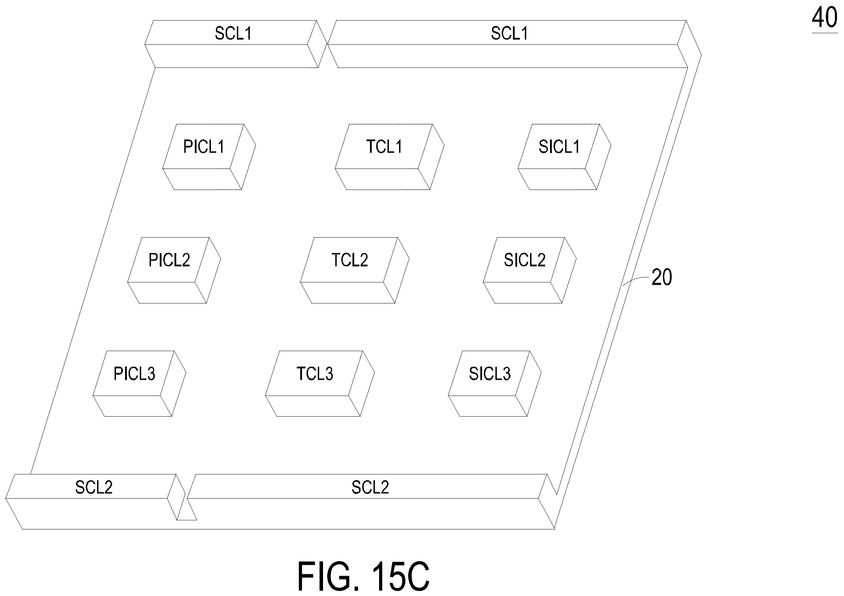

In the above embodiments, the conversion module is exemplified as single-phase converter. However, the present disclosure is not limited thereto. In an embodiment, the conversion module may be a multi-phase converter. For example, FIG. 15A schematically shows a three-phase conversion module. As shown in FIG. 15A, the three-phase conversion module 4 includes a DC/AC cell 401, a transformer and inductor cell 402, and an AC/DC cell 403. The transformer and inductor cell 402 includes three phases. The three phases have a 120-degree phase shift relative to each other, and each phase includes its own transformer, primary inductor and secondary inductor. FIG. 15B schematically shows three magnetic cores corresponding to the three phases in FIG. 15A based on the structure of magnetic core shown in FIG. 5A. As shown in FIG. 15B, the magnetic core 41 corresponding to the first phase includes a primary inductor core leg PICL1, a transformer core leg TCL1, and a secondary inductor core leg SICL1. The magnetic core 42 corresponding to the second phase includes a primary inductor core leg PICL2, a transformer core leg TCL2, and a secondary inductor core leg SICL2. The magnetic core 43 corresponding to the third phase includes a primary inductor core leg PICL3, a transformer core leg TCL3, and a secondary inductor core leg SICL3. Further, the magnetic cores 41, 42 and 43 may be integrated together. As shown in FIG. 15C, the magnetic cores 41, 42 and 43 are integrated into a magnetic core 40. It is noted that the disposed positions of the primary inductor core legs PICL1, PICL2, PICL3, the transformer core legs TCL1, TCL2, TCL3, and the secondary inductor core legs SICL1, SICL2, SICL3 are not limited to that exemplified in the figure.

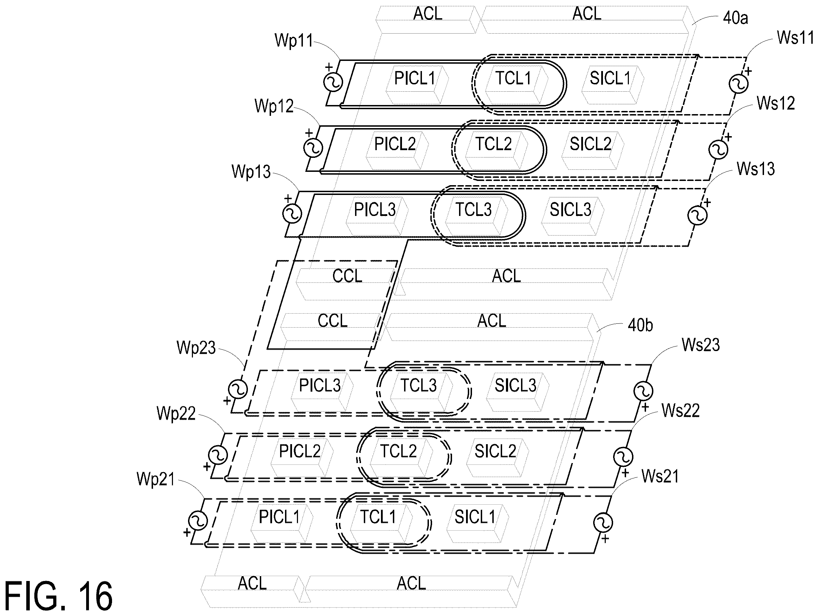

FIG. 16 schematically shows an integrated magnetic component forming the transformer and inductor cells of two three-phase conversion modules based on the magnetic core shown in FIG. 15C. In two adjacent magnetic cores corresponding to two multi-phase conversion modules, the common core leg is wound with the primary or secondary windings at the same phase. As shown in FIG. 16, in the integrated magnetic component, the magnetic cores 40a and 40b are corresponding to the first and second conversion modules respectively. The primary winding Wp11 and the secondary winding Ws11 are corresponding to the first phase of the first conversion module, the primary winding Wp12 and the secondary winding Ws12 are corresponding to the second phase of the first conversion module, and the primary winding Wp13 and the secondary winding Ws13 are corresponding to the third phase of the first conversion module. The primary winding Wp21 and the secondary winding Ws21 are corresponding to the first phase of the second conversion module, the primary winding Wp22 and the secondary winding Ws22 are corresponding to the second phase of the second conversion module, and the primary winding Wp23 and the secondary winding Ws23 are corresponding to the third phase of the second conversion module. Each primary winding is wound around the primary inductor core leg and the transformer core leg of the corresponding phase, and each secondary winding is wound around the secondary inductor core leg and the transformer core leg of the corresponding phase. Moreover, the primary windings Wp13 and Wp23 are further wound around the common core legs CCL of the magnetic cores 40a and 40b. In an embodiment, the adjacent plates, common core legs and/or auxiliary core legs may be further integrated to enhance the performance.

In the above embodiments, the conversion modules of the multi-module DC-DC converter adopt the IPOP configuration. However, the present disclosure is not limited thereto. It is noted that the integrated magnetic component and winding arrangement described above can also be applied to the conversion modules adopt ISOS configuration, ISOP configuration, or IPOS configuration. When the conversion modules are electrically connected in series, the integrated magnetic component and winding arrangement can realize voltage balancing between the conversion modules.

Generally, in accordance with an aspect of the present disclosure, an integrated magnetic component for a multi-module DC-DC converter is provided. The integrated magnetic component includes N primary windings, N secondary windings and N magnetic cores, and N is an integer greater than one. The N magnetic cores are arranged sequentially. Each magnetic core includes a plate, a first common core leg, a second common core leg, an inductor core leg and a transformer core leg. The first common core leg and the second common core leg are disposed at a first side and a second side of the plate respectively. The inductor core leg and the transformer core leg are disposed on the plate. The inductor core leg is configured to be wound with a corresponding primary winding of the N primary windings or a corresponding secondary winding of the N secondary windings, and the transformer core leg is configured to be wound with the corresponding primary winding and the corresponding secondary winding interleaved with each other.

In an embodiment, the second side of the plate of an n-th magnetic core of the N magnetic cores is configured to be adjacent to the first side of the plate of an (n+1)-th of the N magnetic cores, and n is a positive integer less than N. The second common core leg of the n-th magnetic core and the first common core leg of the (n+1)-th magnetic core are configured to be wound with an n-th primary winding and an (n+1)-th primary winding of the N primary windings or to be wound with an n-th secondary winding and an (n+1)-th secondary winding of the N secondary windings.

In an embodiment, the plate of the n-th magnetic core and the plate of the (n+1)-th magnetic core are integrated into one plate, and the second common core leg of the n-th magnetic core and the first common core leg of the (n+1)-th magnetic core, adjacent to each other, are integrated into one common core leg.

In an embodiment, each of the N magnetic cores includes two said first common core legs and two said second common core legs. One of the two second common core legs of the n-th magnetic core and one of the two first common core legs of the (n+1)-th magnetic core are configured to be wound with the n-th primary winding and the (n+1)-th primary winding, and/or the other one of the two second common core legs of the n-th magnetic core and the other one of the two first common core legs of the (n+1)-th magnetic core are configured to be wound with the n-th secondary winding and the (n+1)-th secondary winding.

In an embodiment, in each of the N magnetic cores, the inductor core leg includes a primary inductor core leg and a secondary inductor core leg, the primary inductor core leg is configured to be wound with the corresponding primary winding, and the secondary inductor core leg is configured to be wound with the corresponding secondary winding.

In an embodiment, each of the N magnetic cores includes a plurality of said primary inductor core legs, a plurality of said secondary inductor core legs and a plurality of said transformer core legs. In each of the N magnetic cores, the corresponding primary winding is configured to be wound around the plurality of primary inductor core legs and the plurality of transformer core legs in a figure-eight pattern, and the corresponding secondary winding is configured to be wound around the plurality of secondary inductor core legs and the plurality of transformer core legs in the figure-eight pattern.

In an embodiment, each of the N magnetic cores includes a plurality of said inductor core legs and a plurality of said transformer core legs. In each of the N magnetic cores, one of the corresponding primary winding and the corresponding secondary winding is configured to be wound around the plurality of inductor core legs and the plurality of transformer core legs in a figure-eight pattern, and the other one of the corresponding primary winding and the corresponding secondary winding is configured to be wound around the plurality of transformer core legs in the figure-eight pattern.

In an embodiment, each of the N primary windings includes X primary winding parts corresponding to X phases respectively, each of the N secondary winding includes X secondary winding parts corresponding to the X phases respectively, and X is an integer greater than one. Each of the N magnetic cores includes X said inductor core legs and X said transformer core legs, the X inductor core legs are configured to be wound with the X primary winding parts of the corresponding primary winding respectively or to be wound with the X secondary winding parts of the corresponding secondary winding respectively, and the X transformer core legs are configured to be wound with the X primary winding parts of the corresponding primary winding respectively and to be wound with the X secondary winding parts of the corresponding secondary winding respectively. The second common core leg of the n-th magnetic core and the first common core leg of the (n+1)-th magnetic core are configured to be wound with one of the X primary winding parts of the n-th primary winding and one of the X primary winding parts of the (n+1)-th primary winding corresponding to a same phase, or to be wound with one of the X secondary winding parts of the n-th secondary winding and one of the X secondary winding parts of the (n+1)-th secondary winding corresponding to a same phase.

In accordance with another aspect of the present disclosure, a manufacturing method of an integrated magnetic component for a multi-module DC-DC converter is provided. The manufacturing method includes:
providing N primary windings and N secondary windings, wherein N is an integer greater than one;
providing N magnetic cores arranged sequentially, wherein each of the N magnetic cores includes a plate, a first common core leg, a second common core leg, an inductor core leg and a transformer core leg, wherein in each of the N magnetic cores, the first common core leg and the second common core leg are disposed at a first side and a second side of the plate respectively, the inductor core leg and the transformer core leg are disposed on the plate; and
in each of the N magnetic cores, configuring the inductor core leg to be wound with a corresponding primary winding of the N primary windings or a corresponding secondary winding of the N secondary windings, and configuring the transformer core leg to be wound with the corresponding primary winding and the corresponding secondary winding interleaved with each other.

In an embodiment, the manufacturing method further includes:
configuring the second side of the plate of an n-th magnetic core of the N magnetic cores to be adjacent to the first side of the plate of an (n+1)-th of the N magnetic cores, wherein n is a positive integer less than N; and
configuring the second common core leg of the n-th magnetic core and the first common core leg of the (n+1)-th magnetic core to be wound with an n-th primary winding and an (n+1)-th primary winding of the N primary windings or to be wound with an n-th secondary winding and an (n+1)-th secondary winding of the N secondary windings.

In an embodiment, the manufacturing method further includes: integrating the plate of the n-th magnetic core and the plate of the (n+1)-th magnetic core into one plate, and integrating the second common core leg of the n-th magnetic core and the first common core leg of the (n+1)-th magnetic core, adjacent to each other, into one common core leg.

In an embodiment, each of the N magnetic cores includes two said first common core legs and two said second common core legs, and the manufacturing method further includes:
configuring one of the two second common core legs of the n-th magnetic core and one of the two first common core legs of the (n+1)-th magnetic core to be wound with the n-th primary winding and the (n+1)-th primary winding, and/or configuring the other one of the two second common core legs of the n-th magnetic core and the other one of the two first common core legs of the (n+1)-th magnetic core to be wound with the n-th secondary winding and the (n+1)-th secondary winding.

In an embodiment, in each of the N magnetic cores, the inductor core leg includes a primary inductor core leg and a secondary inductor core leg, and the manufacturing method further includes:
configuring the primary inductor core leg to be wound with the corresponding primary winding, and configuring the secondary inductor core leg to be wound with the corresponding secondary winding.

In an embodiment, each of the N magnetic cores includes a plurality of said primary inductor core legs, a plurality of said secondary inductor core legs and a plurality of said transformer core legs, and the manufacturing method further includes:
in each of the N magnetic cores, winding the corresponding primary winding around the plurality of primary inductor core legs and the plurality of transformer core legs in a figure-eight pattern, and winding the corresponding secondary winding around the plurality of secondary inductor core legs and the plurality of transformer core legs in the figure-eight pattern.

In an embodiment, each of the N magnetic cores includes a plurality of said inductor core legs and a plurality of said transformer core legs, and the manufacturing method further includes:
in each of the N magnetic cores, winding one of the corresponding primary winding and the corresponding secondary winding around the plurality of inductor core legs and the plurality of transformer core legs in a figure-eight pattern, and winding the other one of the corresponding primary winding and the corresponding secondary winding around the plurality of transformer core legs in the figure-eight pattern.

In an embodiment, each of the N primary windings includes X primary winding parts corresponding to X phases respectively, each of the N secondary winding includes X secondary winding parts corresponding to the X phases respectively, and X is an integer greater than one. Each of the N magnetic cores includes X said inductor core legs and X said transformer core legs, and the manufacturing method further includes:
in each of the N magnetic cores, configuring the X inductor core legs to be wound with the X primary winding parts of the corresponding primary winding respectively or to be wound with the X secondary winding parts of the corresponding secondary winding respectively, and configuring the X transformer core legs to be wound with the X primary winding parts of the corresponding primary winding respectively and to be wound with the X secondary winding parts of the corresponding secondary winding respectively; and
configuring the second common core leg of the n-th magnetic core and the first common core leg of the (n+1)-th magnetic core to be wound with one of the X primary winding parts of the n-th primary winding and one of the X primary winding parts of the (n+1)-th primary winding corresponding to a same phase, or to be wound with one of the X secondary winding parts of the n-th secondary winding and one of the X secondary winding parts of the (n+1)-th secondary winding corresponding to a same phase.

In accordance with further another aspect of the present disclosure, multi-module DC-DC converter is provided. The multi-module DC-DC converter includes N conversion modules configured to be connected between a power source and a load, wherein N is an integer greater than one. Each conversion module includes a DC/AC cell, a transformer and inductor cell and an AC/DC cell. N transformer and inductor cells of the N conversion modules are formed by an integrated magnetic component. The integrated magnetic component includes N primary windings, N secondary windings and N magnetic cores, and the N magnetic cores are arranged sequentially. Each magnetic core includes a plate, a first common core leg, a second common core leg, an inductor core leg and a transformer core leg. The first common core leg and the second common core leg are disposed at a first side and a second side of the plate respectively. The inductor core leg and the transformer core leg are disposed on the plate. The inductor core leg is configured to be wound with a corresponding primary winding of the N primary windings or a corresponding secondary winding of the N secondary windings, and the transformer core leg is configured to be wound with the corresponding primary winding and the corresponding secondary winding interleaved with each other.

In an embodiment, the second side of the plate of an n-th magnetic core of the N magnetic cores is configured to be adjacent to the first side of the plate of an (n+1)-th of the N magnetic cores, and n is a positive integer less than N. The second common core leg of the n-th magnetic core and the first common core leg of the (n+1)-th magnetic core are configured to be wound with an n-th primary winding and an (n+1)-th primary winding of the N primary windings or to be wound with an n-th secondary winding and an (n+1)-th secondary winding of the N secondary windings.

In an embodiment, the N conversion modules are configured to connected in an input parallel output parallel configuration, an input series output series configuration, an input series output parallel configuration, or an input parallel output series configuration.

In an embodiment, the transformer and inductor cell of each of the N conversion modules includes a transformer and includes a primary inductor and/or a secondary inductor.

## Claims

1. An integrated magnetic component for a multi-module DC-DC converter (1), **characterized by** comprising:
N primary windings (Wp1, Wp2) and N secondary windings (Ws1, Ws2), wherein N is an integer greater than one; and
N magnetic cores (21, 22), arranged sequentially, wherein each of the N magnetic cores comprises:
a plate (20);
a first common core leg and a second common core leg (CCL), disposed at a first side (201) and a second side (202) of the plate (20) respectively; and
an inductor core leg (PICL, SICL) and a transformer core leg (TCL), disposed on the plate (20), wherein the inductor core leg (PICL, SICL) is configured to be wound with a corresponding primary winding of the N primary windings (Wp1), or a corresponding secondary winding of the N secondary windings (Ws1), and the transformer core leg (TCL) is configured to be wound with the corresponding primary winding (Wp1) and the corresponding secondary winding (Ws1) interleaved with each other.

2. The integrated magnetic component according to claim 1, wherein the second side (202) of the plate (20) of an n-th magnetic core of the N magnetic cores (21) is configured to be adjacent to the first side (201) of the plate (20) of an (n+1)-th magnetic core (22) of the N magnetic cores, and n is a positive integer less than N; wherein the second common core leg (CCL) of the n-th magnetic core (21) and the first common core leg (CCL) of the (n+1)-th magnetic core (22) are configured to be wound with an n-th primary winding (Wp1) and an (n+1)-th primary winding (Wp2) of the N primary windings, or to be wound with an n-th secondary winding (Ws1) and an (n+1)-th secondary winding (Ws2) of the N secondary windings;
wherein the plate (20) of the n-th magnetic core (21) and the plate (20) of the (n+1)-th magnetic core (22) are integrated into one plate, and the second common core leg (CCL) of the n-th magnetic core (21) and the first common core leg (CCL) of the (n+1)-th magnetic core (22), adjacent to each other, are integrated into one common core leg.

3. The integrated magnetic component according to claim 1, wherein each of the N magnetic cores comprises two said first common core legs and two said second common core legs; wherein one of the two second common core legs (CCL) of an n-th magnetic core (21) of the N magnetic cores and one of the two first common core legs (CCL) of an (n+1)-th magnetic core (22) of the N magnetic cores are configured to be wound with an n-th primary winding (Wp1) and an (n+1)-th primary winding (Wp2) of the N primary windings, and/or the other one of the two second common core legs (CCL) of the n-th magnetic core (21) and the other one of the two first common core legs (CCL) of the (n+1)-th magnetic core (22) are configured to be wound with an n-th secondary winding (Ws1) and an (n+1)-th secondary winding (Ws2) of the N secondary windings; wherein n is a positive integer less than N.

4. The integrated magnetic component according to claim 1, wherein in each of the N magnetic cores (21), the inductor core leg comprises a primary inductor core leg (PICL) and a secondary inductor core leg (SICL), the primary inductor core leg (PICL) is configured to be wound with the corresponding primary winding (Wp1), and the secondary inductor core leg (SICL) is configured to be wound with the corresponding secondary winding (Ws1);
wherein each of the N magnetic cores comprises a plurality of said primary inductor core legs (PICL1, PICL2), a plurality of said secondary inductor core legs (SICL1, SICL2) and a plurality of said transformer core legs (TCL1, TCL2); wherein in each of the N magnetic cores (21), the corresponding primary winding (Wp1) is configured to be wound around the plurality of primary inductor core legs (PICL1, PICL2) and the plurality of transformer core legs (TCL1, TCL2) in a figure-eight pattern, and the corresponding secondary winding (Ws1) is configured to be wound around the plurality of secondary inductor core legs (SICL1, SICL2) and the plurality of transformer core legs (TCL1, TCL2) in the figure-eight pattern.

5. The integrated magnetic component according to claim 1, wherein each of the N magnetic cores (21) comprises a plurality of said inductor core legs (PICL1, PICL2 or SICL1, SICL2) and a plurality of said transformer core legs (TCL1, TCL2); wherein in each of the N magnetic cores (21), one of the corresponding primary winding (Wp1) and the corresponding secondary winding (Ws1) is configured to be wound around the plurality of inductor core legs (PICL1, PICL2 or SICL1, SICL2) and the plurality of transformer core legs (TCL1, TCL2) in a figure-eight pattern, and the other one of the corresponding primary winding (Wp1) and the corresponding secondary winding (Ws1) is configured to be wound around the plurality of transformer core legs (TCL1, TCL2) in the figure-eight pattern.

6. The integrated magnetic component according to claim 1, wherein each of the N primary windings (Wp1) comprises X primary winding parts (Wp11, Wp12, Wp13) corresponding to X phases respectively, each of the N secondary winding (Ws1) comprises X secondary winding parts (Ws11, Ws12, Ws13) corresponding to the X phases respectively, and X is an integer greater than one; wherein each of the N magnetic cores (40a) comprises X said inductor core legs (PICL1-PICL3 or SICL1-SICL3) and X said transformer core legs (TCL1-TCL3), the X inductor core legs are configured to be wound with the X primary winding parts (Wp11, Wp12, Wp13) of the corresponding primary winding (Wp1) respectively or to be wound with the X secondary winding parts (Ws11, Ws12, Ws13) of the corresponding secondary winding (Ws1) respectively, and the X transformer core legs (TCL1-TCL3) are configured to be wound with the X primary winding parts (Wp11, Wp12, Wp13) of the corresponding primary winding respectively and to be wound with the X secondary winding parts (Ws11, Ws12, Ws13) of the corresponding secondary winding respectively; wherein the second common core leg (CCL) of an n-th magnetic core (40a) of the N magnetic cores and the first common core leg (CCL) of an (n+1)-th magnetic core (40b) of the N magnetic cores are configured to be wound with one of the X primary winding parts (Wp13) of an n-th primary winding (Wp1) of the N primary windings and one of the X primary winding parts (Wp23) of an (n+1)-th primary winding (Wp2) of the N primary windings corresponding to a same phase, or to be wound with one of the X secondary winding parts (Ws13) of an n-th secondary winding (Ws1) of the N secondary windings and one of the X secondary winding parts (Ws23) of an (n+1)-th secondary winding (Ws2) of the N secondary windings corresponding to a same phase; where n is a positive integer less than N.

7. A manufacturing method of an integrated magnetic component for a multi-module DC-DC converter (1), **characterized by** comprising:
providing N primary windings (Wp1, Wp2) and N secondary windings (Ws1, Ws2), wherein N is an integer greater than one;
providing N magnetic cores (21, 22) arranged sequentially, wherein each of the N magnetic cores comprises a plate (20), a first common core leg (CCL), a second common core leg (CCL), an inductor core leg (PICL, SICL) and a transformer core leg (TCL), wherein in each of the N magnetic cores, the first common core leg and the second common core leg (CCL) are disposed at a first side (201) and a second side (202) of the plate (20) respectively, the inductor core leg (PICL, SICL) and the transformer core leg (TCL) are disposed on the plate (20); and
in each of the N magnetic cores (21), configuring the inductor core leg (PICL, SICL) to be wound with a corresponding primary winding (Wp1) of the N primary windings or a corresponding secondary winding (Ws1) of the N secondary windings, and configuring the transformer core leg (TCL) to be wound with the corresponding primary winding (Wp1) and the corresponding secondary winding (Ws1) interleaved with each other.

8. The manufacturing method according to claim 7, further comprising:
configuring the second side (202) of the plate (20) of an n-th magnetic core (21) of the N magnetic cores to be adjacent to the first side (201) of the plate (20) of an (n+1)-th magnetic core (22) of the N magnetic cores, wherein n is a positive integer less than N;
configuring the second common core leg (CCL) of the n-th magnetic core (21) and the first common core leg (CCL) of the (n+1)-th magnetic core (22) to be wound with an n-th primary winding (Wp1) and an (n+1)-th primary winding (Wp2) of the N primary windings or to be wound with an n-th secondary winding (Ws1) and an (n+1)-th secondary winding (Ws2) of the N secondary windings; and
integrating the plate (20) of the n-th magnetic core (21) and the plate (20) of the (n+1)-th magnetic core (22) into one plate, and integrating the second common core leg (CCL) of the n-th magnetic core (21) and the first common core leg (CCL) of the (n+1)-th magnetic core (22), adjacent to each other, into one common core leg.

9. The manufacturing method according to claim 7, wherein each of the N magnetic cores comprises two said first common core legs and two said second common core legs, and the manufacturing method further comprises:
configuring one of the two second common core legs (CCL) of an n-th magnetic core (21) of the N magnetic cores and one of the two first common core legs (CCL) of an (n+1)-th magnetic core (22) of the N magnetic cores to be wound with an n-th primary winding (Wp1) and an (n+1)-th primary winding (Wp2) of the N primary windings, and/or configuring the other one of the two second common core legs (CCL) of the n-th magnetic core (21) and the other one of the two first common core legs (CCL) of the (n+1)-th magnetic core (22) to be wound with an n-th secondary winding (Ws1) and an (n+1)-th secondary winding (Ws2) of the N secondary windings; wherein n is a positive integer less than N.

10. The manufacturing method according to claim 7, wherein in each of the N magnetic cores (21), the inductor core leg comprises a primary inductor core leg (PICL) and a secondary inductor core leg (SICL), and the manufacturing method further comprises:
configuring the primary inductor core leg (PICL) to be wound with the corresponding primary winding (Wp1), and configuring the secondary inductor core leg (SICL) to be wound with the corresponding secondary winding (Ws1);
wherein each of the N magnetic cores comprises a plurality of said primary inductor core legs (PICL1, PICL2), a plurality of said secondary inductor core legs (SICL1, SICL2) and a plurality of said transformer core legs (TCL1, TCL2), and the manufacturing method further comprises:
in each of the N magnetic cores (21), winding the corresponding primary winding (Wp1) around the plurality of primary inductor core legs (PICL1, PICL2) and the plurality of transformer core legs (TCL1, TCL2) in a figure-eight pattern, and winding the corresponding secondary winding (Ws1) around the plurality of secondary inductor core legs (SICL1, SICL2) and the plurality of transformer core legs (TCL1, TCL2) in the figure-eight pattern.

11. The manufacturing method according to claim 7, wherein each of the N magnetic cores (21) comprises a plurality of said inductor core legs (PICL1, PICL2 or SICL1, SICL2) and a plurality of said transformer core legs (TCL1, TCL2), and the manufacturing method further comprises:
in each of the N magnetic cores (21), winding one of the corresponding primary winding (Wp1) and the corresponding secondary winding (Ws1) around the plurality of inductor core legs (PICL1, PICL2 or SICL1, SICL2) and the plurality of transformer core legs (TCL1, TCL2) in a figure-eight pattern, and winding the other one of the corresponding primary winding (Wp1) and the corresponding secondary winding (Ws1) around the plurality of transformer core legs (TCL1, TCL2) in the figure-eight pattern.

12. The manufacturing method according to claim 7, wherein each of the N primary windings (Wp1) comprises X primary winding parts (Wp11, Wp12, Wp13) corresponding to X phases respectively, each of the N secondary winding (Ws1) comprises X secondary winding parts (Ws11, Ws12, Ws13) corresponding to the X phases respectively, and X is an integer greater than one; wherein each of the N magnetic cores (40a) comprises X said inductor core legs (PICL1-PICL3 or SICL1-SICL3) and X said transformer core legs (TCL1-TCL3), and the manufacturing method further comprises:
in each of the N magnetic cores (40a), configuring the X inductor core legs to be wound with the X primary winding parts (Wp11, Wp12, Wp13) of the corresponding primary winding (Wp1) respectively or to be wound with the X secondary winding parts (Ws11, Ws12, Ws13) of the corresponding secondary winding (Ws1) respectively, and configuring the X transformer core legs (TCL1-TCL3) to be wound with the X primary winding parts (Wp11, Wp12, Wp13) of the corresponding primary winding respectively and to be wound with the X secondary winding parts (Ws11, Ws12, Ws13) of the corresponding secondary winding respectively; and
configuring the second common core leg (CCL) of an n-th magnetic core (40a) of the N magnetic cores and the first common core leg (CCL) of an (n+1)-th magnetic core (40b) of the N magnetic cores to be wound with one of the X primary winding parts (Wp13) of an n-th primary winding (Wp1) of the N primary windings and one of the X primary winding parts (Wp23) of an (n+1)-th primary winding (Wp2) of the N primary windings corresponding to a same phase, or to be wound with one of the X secondary winding parts (Ws13) of an n-th secondary winding (Ws1) of the N secondary windings and one of the X secondary winding parts (Ws23) of an (n+1)-th secondary winding (Ws2) of the N secondary windings corresponding to a same phase; wherein n is a positive integer less than N.

13. A multi-module DC-DC converter (1), **characterized by** comprising:
N conversion modules (11-1N), configured to be connected between a power source (Vin) and a load (RL), wherein N is an integer greater than one, and each of the N conversion modules comprises a DC/AC cell (101), a transformer and inductor cell (102) and an AC/DC cell (103),
wherein N transformer and inductor cells (102) of the N conversion modules (11-1N) are formed by an integrated magnetic component, the integrated magnetic component comprises N primary windings (Wp1, Wp2), N secondary windings (Ws1, Ws2) and N magnetic cores (21, 22), the N magnetic cores are arranged sequentially, and each of the N magnetic cores comprises:
a plate (20);
a first common core leg and a second common core leg (CCL), disposed at a first side (201) and a second side (202) of the plate (20) respectively; and
an inductor core leg (PICL, SICL) and a transformer core leg (TCL), disposed on the plate (20), wherein the inductor core leg (PICL, SICL) is configured to be wound with a corresponding primary winding (Wp1) of the N primary windings or a corresponding secondary winding (Ws1) of the N secondary windings, and the transformer core leg (TCL) is configured to be wound with the corresponding primary winding (Wp1) and the corresponding secondary winding (Ws1) interleaved with each other.

14. The multi-module DC-DC converter (1) according to claim 13, wherein the second side (202) of the plate (20) of an n-th magnetic core (21) of the N magnetic cores is configured to be adjacent to the first side (201) of the plate (20) of an (n+1)-th magnetic core (22) of the N magnetic cores, and n is a positive integer less than N; wherein the second common core leg (CCL) of the n-th magnetic core (21) and the first common core leg (CCL) of the (n+1)-th magnetic core (22) are configured to be wound with an n-th primary winding (Wp1) and an (n+1)-th primary winding (Wp2) of the N primary windings or to be wound with an n-th secondary winding (Ws1) and an (n+1)-th secondary winding (Ws2) of the N secondary windings.

15. The multi-module DC-DC converter (1) according to claim 13, wherein the N conversion modules (11-1N) are configured to connected in an input parallel output parallel configuration, an input series output series configuration, an input series output parallel configuration, or an input parallel output series configuration;
wherein the transformer and inductor cell (102) of each of the N conversion modules (11) comprises a transformer (TR1) and comprises a primary inductor (Lp1) and/or a secondary inductor (Ls1).
